# EUROPEAN PATENT APPLICATION

(11) **EP 3 190 564 A1**
(43) Date of publication of application: **12.07.2017**
(21) Application number: 16150514.4
(22) Date of filing: 08.01.2016
(51) Int. Cl.: G06Q 50/32, G06Q 10/06, G06Q 10/08, G06Q 50/28

(54) **LIMITING THE EXPOSURE OF DELIVERY-RELATED INFORMATION IN A DELIVERY PROCESS**

(71) Applicant: Deutsche Post AG, 53113 Bonn (DE)
(72) Inventor: PIENTKA, Karin, 53177 Bonn (DE); IRRGANG, Andreas, 51069 Köln (DE); REDENIUS, Michael, 53125 Bonn (DE); BECKMANN, Dr., Clemens, 50677 Köln (DE)
(74) Representative: Cohausz & Florack

(57) **Abstract**

It is disclosed to provide (201), to a first apparatus (1) associated with a sender of a shipment, first information that can be caused, by the first apparatus (1) or the sender, to become associated with the shipment and thus obtainable by a second apparatus (2) associated with an entity that is involved in a process of delivering the shipment according to delivery-related information. It is further disclosed to provide, to the second apparatus (2), second information, wherein the second information is either third information that is a first representation of at least a part of the delivery-related information selected at least based on at least a part of the first information, or is fourth information that is useable for deriving, from at least a part of the first information, a first representation of at least a part of the delivery-related information. Therein, the second information is neither provided to the first apparatus (1) nor to the sender. Further disclosed are methods related to corresponding processing at the first apparatus (1) and the second apparatus (2), and corresponding computer programs and apparatuses.

## Description

### FIELD OF THE DISCLOSURE

The invention relates to the field of delivering shipments from senders to recipients based on delivery-related information, and more specifically relates to limiting the exposure of delivery-related information to entities involved in the delivery of these shipments.

### BACKGROUND

It is nowadays commonplace to purchase products (e.g. goods and services) online, in particular via the Internet. To purchase a product, a person simply uses a browser to navigate to an online shop that is identified by its Internet address. At the online shop, the person can select one or more products for inclusion into a virtual shopping cart. After the shopping cart has been filled, a checkout procedure can be started. In the context of the checkout procedure, delivery-related information, in particular the delivery address, to which the shipment shall be delivered, has to be defined by the person. After the delivery information has been specified, payment information has to be provided by the person, which payment information is optionally verified by a payment gateway server. After this purchase process has been completed, usually the delivery process starts. The delivery process targets at delivering a shipment including the purchased product according to the specified delivery-related information, in particular to the specified delivery address. In this delivery process, the online shop (via its personnel) usually acts as a sender of the shipment, whereas the person that purchased the product usually acts as the recipient of the shipment. The delivery process usually starts by the online shop handing over the shipment that has been furnished with a label comprising the delivery address to a delivery company that takes care of the delivery to the indicated delivery address.

### SUMMARY OF SOME EXAMPLE EMBODIMENTS OF THE INVENTION

While it is generally possible for a person to login to online shops without revealing the person's identity (e.g. an email address not necessarily linked to the person's name and a password may be sufficient as login credentials) and also to conduct payments for purchased products without revealing the person's identity (e.g. by using coupons, bitcoins or pre-paid cash cards), there currently exists no possibility to avoid disclosing delivery-related information, in particular the delivery address, to the online shop, since the online shop requires the delivery address to have the shipment with the purchased product delivered.

Disclosing a person's address as delivery address to an online shop may be considered disadvantageous since the online shop may thus be put into a position to link a customer profile derived by the online shop from the person's purchases to the person's address and thus the person's identity.

Furthermore, if a person shops in several online shops, it may be considered disadvantageous that the person's address (used as delivery address) is exposed to respective personnel of these online shops, since the person cannot assess the trustworthiness of this personnel. This may become particularly relevant if the person purchases high-valued products.

One approach to avoid disclosure of a person's address as delivery address to an online shop is to provide the online shop with another person's address as the delivery address. This may however not always be possible or desired, e.g. depending on the nature of the product purchased (e.g. private products, presents, etc.).

There is thus inter alia a need for a delivery approach that overcomes these drawbacks of the prior art. In particular, it would be advantageous to limit exposure of the delivery-related information or at least of the most sensitive parts thereof (like for instance name, apartment number and/or street number of the delivery address) to the sender (like e.g. an online shop) of a shipment.

According to a first exemplary aspect of the invention, a method is disclosed, the method comprising:
- providing, to a first apparatus associated with a sender of a shipment, first information that can be caused, by the first apparatus or the sender, to become associated with the shipment and thus obtainable by a second apparatus associated with an entity that is involved in a process of delivering the shipment according to delivery-related information;
- providing, to the second apparatus, second information, wherein the second information is either third information that is a first representation of at least a part of the delivery-related information selected at least based on at least a part of the first information, or is fourth information that is useable for deriving, from at least a part of the first information, a first representation of at least a part of the delivery-related information;
wherein the second information is neither provided to the first apparatus nor to the sender.

According to a second exemplary aspect of the invention, a method is disclosed, the method comprising:
- obtaining, at a second apparatus associated with an entity that is involved in a process of delivering a shipment according to delivery-related information, first information that is associated with the shipment; and
- obtaining, at the second apparatus, second information, wherein the second information is either third information that is a first representation of at least a part of the delivery-related information selected at least based on at least a part of the first information, or is fourth information that is useable for deriving, from at least a part of the first information, a first representation of at least a part of the delivery-related information.

According to a third exemplary aspect of the invention, a method is disclosed, the method comprising:
- receiving, at a first apparatus associated with a sender of a shipment, first information;
- conducting or triggering a process in which the first information is associated with the shipment and thus becomes obtainable by a second apparatus associated with an entity that is involved in a process of delivering the shipment according to delivery-related information;
wherein the first information has one of the following properties:
- at least a part of the first information can be provided by the second apparatus to another apparatus to allow the other apparatus to select third information, which is a first representation of at least a part of the delivery-related information and which is to be provided to the second apparatus; or
- from at least a part of the first information, a first representation of at least a part of the delivery-related information can be derived at the second apparatus using fourth information.

Moreover, for all three aspects of the invention presented above (referred to as the "respective aspect" below), the following is disclosed:
- A computer program according to the respective aspect of the invention, the computer program when executed by a processor causing an apparatus to perform or control the method according to the respective aspect of the invention.
- A computer readable storage medium according to the respective aspect of the invention, in which the computer program according to the respective aspect of the invention is stored. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory (e.g. a Read-Only Memory (ROM)) or hard disk of a computer, or be intended for distribution of the program, like an optical disc.
- An apparatus according to the respective aspect of the invention, which is configured to perform or comprises respective means for performing or controlling the method according to the respective aspect of the invention. The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means.
- An apparatus according to the respective aspect of the invention, comprising at least one processor and at least one memory including computer program code, the at least one memory and the computer program code configured to, with the at least one processor, cause an apparatus at least to perform or control the method according to the respective aspect of the invention.

The disclosed apparatus according to any aspect of the invention may be a module or a component for a device, for example a chip. Alternatively, the disclosed apparatus according to any aspect of the invention may be a device, for instance a server or a portable electronic device. The disclosed apparatus according to any aspect of the invention may comprise only the disclosed components (e.g. means) or may further comprise one or more additional components.

Moreover, an example of a system according to the invention is disclosed, which comprises an apparatus according to the first aspect of the invention, one or more apparatuses according to the second aspect of the invention, and an apparatus according to the third aspect of the invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE FIGURES

In the figures show:
- Fig. 1: a schematic block diagram of a system according to an example embodiment of the present invention;
- Fig. 2a-2e: flowcharts showing example embodiments of a method according to the first aspect of the present invention;
- Fig. 3: a flowchart of an example embodiment of a method according to the third aspect of the present invention;
- Fig. 4a-4f: flowcharts showing example embodiments of a method according to the second aspect of the present invention;
- Fig. 5a: a flowchart of an example embodiment of a method that may form part of an example embodiment of the method according to the first aspect of the invention;
- Fig. 5b: a flowchart of an example embodiment of a further method that may form part of an example embodiment of the method according to the first aspect of the invention;
- Fig. 6: a schematic block diagram of example embodiment of an apparatus according to the first, second and third aspect of the invention;
- Fig. 7: a flowchart illustrating exemplary actions taking place in an example embodiment of a system according to the present invention;
- Fig. 8: a flowchart illustrating exemplary actions taking place in a further example embodiment of a system according to the present invention; and
- Fig. 9: a flowchart illustrating an exemplary method for confirming a person's delivery-related information according to the present invention.

### DETAILED DESCRIPTION OF EXAMPLE EMBODIMENTS OF THE INVENTION

Example embodiments of the present invention target to limit the exposure of delivery-related information of shipments during delivery of the shipments.

Delivery-related information of a shipment may for instance be or comprise the delivery address to which the shipment is to be delivered to. Additionally or alternatively, the delivery-related information may be or comprise information that is required by a deliverer to conduct the delivery of the shipment, such as for instance information (e.g. an electronic key or code) that has to be provided by the deliverer or his/her device to get access to an unattended delivery device into which the shipment shall be delivered, and/or authentication-related information that allows (e.g. a deliverer or a facility (or its personnel) where a shipment has been deposited for retrieval), based on authentication information provided by a person, to decide whether the person is entitled to receive the shipment or not.

To achieve this target, the delivery-related information is managed by a repository and only selectively and/or partially released to entities that are involved in the delivery process, including the sender of the shipment (the sender of the shipment is understood as the entity that provides the shipment to a delivery company to initiate the process of delivering the shipment according to the delivery-related information (e.g. to a delivery address), such as for instance a seller of a product that needs to be delivered according to delivery-related information). In this manner, it can for instance be achieved that the sender is not able to learn the delivery-related information (such as for instance the delivery address) at all, that entities like freight centres only learn a rough representation of the delivery-related information (e.g. the delivery address) that may for instance only exhibit a level of detail that is required to forward the shipment to the next entity in the delivery chain (a logical sequence of entities that are involved in the process of delivering a shipment according to delivery-related information), and that the last-mile deliverer is only enabled to learn the complete delivery-related information (e.g. the complete delivery address) when he/she has entered a pre-defined area associated with delivery-related information (e.g. a 2km area around the delivery address). Therein, exposure of the delivery-related information can for instance be achieved by encrypting the delivery-related information and only selectively enabling entities involved in the delivery process to decrypt parts of the delivery-related information or the entire delivery-related information, or by only selectively releasing parts of the delivery-related information to entities involved in the delivery process.

Examples of shipments are parcels, letters, freight pieces, etc.. A shipment may for instance contain one or more products purchased by a person, e.g. in an online shop or at a (local) point-of-sale like a shop or a store physically visited by the person. Products may be all kinds of goods such as books, electronics, clothes, etc.. Shipments may alternatively contain items that are related to services ordered by the person (e.g. online, or via phone, or at a local point-of-sale), such as for instance meals (e.g. fast-food), daily shopping or laundry.

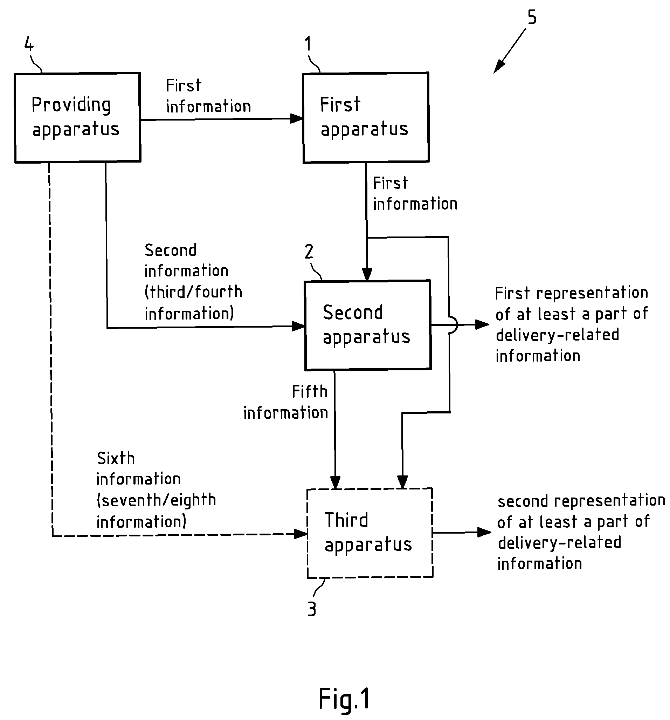

Fig. 1 is a schematic high-level block diagram of a system 5 according to an example embodiment of the present invention. System 5 comprises a providing apparatus 4 that acts as delivery-related information repository. Providing apparatus 4 constitutes an example embodiment of an apparatus according to the first aspect of the present invention. Providing apparatus 4 may for instance be embodied as a computer, in particular as a server. It is to be noted that providing apparatus 4 may also be representative of a plurality of apparatuses or components that jointly perform a task, in particular a task as described by an exemplary embodiment of a method according to the first aspect of the present invention.

Persons wishing to use a delivery option where exposure of the delivery-related information is limited according to the present invention may register their desired delivery-related information (e.g. their desired delivery address) at providing apparatus 4 and use this registered delivery-related information then later when purchasing products in various online shops. Registration would for instance take by communicating with the providing apparatus 4 by means of a computer, which is not shown in Fig. 1 for the sake of simplicity of presentation. In example embodiments of the present invention, a person only registers a part (e.g. the desired delivery address and/or information necessary for a deliverer to get access to an unattended delivery device at the delivery address, such as for instance an electronic key or code) of the delivery-related information at providing apparatus 4, and at least one other part (or the rest) of the delivery-related information (e.g. authentication-related information) is then generated by the providing apparatus 4 or another entity.

As already stated, the delivery-related information may for instance be or comprise the delivery address to which the shipment shall be delivered. The delivery address may for instance comprise the following components: Country, city, zip code, street, house number, name (e.g. including first name and last name, or last name only). Of course further information can be comprised in the address, such as e.g. a county information, information on an apartment number for apartment building, etc.. If the delivery address specifies a facility where a shipment is deposited for retrieval by a person to which the shipment is destined (e.g. the intended recipient of the shipment), the delivery address may not have to contain the name of the person, as will be further explained below. The delivery address may for instance be coded, e.g. in the form of a routing code (e.g. the "Leitcode" used by Deutsche Post AG in Germany) that contains code-words of pre-defined lengths respectively representing the zip code, street and house number. The routing code may optionally further contain a product identifier and/or a check sum. Additionally or alternatively, the delivery address may be given in coordinates (e.g. in World Geodetic System 1984 (WGS-84) coordinates), which is particularly advantageous if the place where the delivery shall take place has no postal address assigned to it.

The delivery address may thus for instance define a house or an apartment in an apartment building where the shipment is to be delivered to an inhabitant thereof. The delivery address may alternatively pertain to an unattended delivery device, like for instance a stand-alone letter box, a stand-alone parcel box, a lockable compartment (e.g. a trunk) of a vehicle, or a lockbox in an apparatus that comprises a plurality of lockboxes (such as a so-called "Packstation" deployed by Deutsche Post DHL in public places, or such as a lockbox arrangement with multiple lockboxes deployed in an apartment house for allowing the inhabitans of the apartment house to send and receive shipments), which unattended delivery device is capable of receiving shipments also in absence of the recipient of the shipment. The delivery address may then for instance define where this unattended delivery box is to be found by the deliverer, e.g. by defining the address of a house or apartment house or place at which address also the unattended delivery box is installed. This may involve, in case of an apparatus with a plurality of lockboxes, the inclusion of information (e.g. an identifier) on a specific lockbox of the plurality of lockboxes into the delivery address. In case of a lockable compartment of a vehicle as unattended delivery device, the delivery address may comprise information on the vehicle (e.g. an identifier of the vehicle like for instance a license number, and/or information on a current position of the vehicle).

In case of unattended delivery devices, the delivery-related information may, in addition to the delivery address, optionally further comprise information required to get access to the unattended delivery device, e.g. in the form of a code or other authorization information. Delivery-related information may then for instance only be considered complete if it contains both a specification where the unattended delivery device can be found by the deliverer as well as information required to get access to the unattended delivery device.

System 5 further comprises a first apparatus 1. First apparatus 1 constitutes an example embodiment of an apparatus according to the third aspect of the present invention. First apparatus 1 is in communication with providing apparatus 4 and receives first information from providing apparatus 4. Provision of the first information to first apparatus 1 may for instance be triggered and/or requested by first apparatus. It may nevertheless also be the case that a person's computer (not shown in Fig. 1), which is in communication with the first apparatus 1, is directed by the first apparatus 1 to communicate with providing apparatus 4, e.g. to allow the person to provide credentials to providing apparatus 4, and that providing apparatus 4 then provides the first information to the first apparatus 1 in response to the reception of the credentials. The first apparatus 1 may for instance be associated with a sender of a shipment. It may for instance be a computer or server of the sender of a shipment. First apparatus 1 may in particular be a server (or one of several servers) that runs an online shop (e.g. implemented as software) of the sender of a shipment. The first information may for instance be provided to the first apparatus 1 in the context of a product purchase that is conducted by a person in an online shop. For instance, the first information may be provided to the first apparatus 1 after the person has chosen, as delivery option, delivery with limited exposure of the delivery-related information according to the present invention and has provided his/her credentials to the providing apparatus 4. It is to be noted that first apparatus 1 may also be representative of a plurality of apparatuses or components that jointly perform a task, in particular a task as described by an exemplary embodiment of a method according to the third aspect of the present invention.

The first information may take various forms. In exemplary embodiments of the present invention, the first information may be an identifier that is associated with the delivery-related information. The first information may then, apart from the identifier, not contain any of the delivery-related information at all (e.g. may not contain any delivery address information at all), or may only contain a part of the delivery-related information (e.g. a part of the delivery address). The identifier may for instance be a transaction identifier or shipment identifier. The identifier may for instance also be used for tracking the shipment. The identifier may for instance be generated (e.g. based on a random number and/or a timestamp and/or information of the delivery-related information itself) by the providing apparatus 4. Also the association between the identifier and the delivery-related information may be created by the providing apparatus 4. The identifier then allows entities such as the second apparatus 2 and/or the third apparatus 3 to request at least a part of the delivery-related information from the providing apparatus 4. Therein, the extent to which the delivery-related information is revealed to the requesting entities may depend on the respective type or the respective authorization of the requesting entity. For instance, if the delivery-related information comprises the delivery address to which the shipment shall be delivered to, a sender of the shipment may not be provided with any part of the delivery address, or may only be provided with parts of the delivery address that allow for a rough geographical localization of the recipient (e.g. with the country, city and zip code, but not with the street no., apartment no. and name). A freight centre may for instance only be provided with those parts of the delivery address that are inevitably required to forward the shipment to the next entity in the delivery chain (e.g. to the inward freight centre, if the freight centre is an outward freight centre). Finally, an entity (e.g. the deliverer) that hands over the shipment to the recipient at the delivery address may be provided with the full delivery address or at least with those parts of the delivery address that have not been provided to previous entities in the delivery chain (the parts of the delivery address that have already been provided to one or more previous entities in the delivery chain may for instance be visible from a label affixed to the shipment by at least one of the previous one or more entities).

In other exemplary embodiments of the present invention, the first information contains the entire delivery-related information (e.g. the entire delivery address), but in encrypted form. Encryption may take various forms known to a person skilled in the art, for instance symmetric or asymmetric encryption. Therein, either all parts of the delivery-related information may be encrypted with the same key, or different parts of the delivery-related information may be encrypted with different keys. This is advantageous since then different parts of the delivery-related information can be revealed to different entities by accordingly providing different keys or different numbers of keys to these different entities. For instance, an entity that is involved comparably early in the delivery process of a shipment, as for instance the sender of the shipment, may not be provided with a key at all, whereas an entity that is involved later may be furnished with a key or keys that only allow to decrypted a part of the delivery-related information (that for instance contains the country, city and zip code of the delivery address), whereas an entity (e.g. the deliverer) that hands over the shipment to the recipient at the delivery address may be furnished with a key or keys that allows to decrypted the entire delivery-related information (e.g. the entire delivery address), or at least those parts thereof that have not been decrypted by previous entities in the delivery chain. The parts of the delivery-related information that have already been decrypted by one or more previous entities in the delivery chain may for instance be visible from a label affixed to the shipment by at least one of the previous one or more entities. Encryption may for instance be based on symmetric keys (i.e. keys that are the same at the providing apparatus 4 and the apparatuses where decryption takes place, like for instance Advanced Encryption Standard (AES) keys), which may involve a higher burden for ensuring the secrecy of the keys at the apparatuses where decryption takes place, or may be based on asymmetric keys (i.e. key pairs where a private key is used at the providing apparatus 4 and public keys are used at the apparatuses where decryption takes place, e.g. Rivest, Shamir, Adleman (RSA) keys). The first information may, in addition to the encrypted delivery-related information, also contain an identifier that allows the second apparatus 2 to indicate to the providing apparatus 4 for which delivery-related information second information (in particular a decryption key) is required. It is also conceivable that the first information contains an at least partially encrypted representation of the delivery-related information, e.g. in a form that only a part of the delivery-related information is encrypted, while another part is not encrypted.

As will be discussed in further detail below, the first information may for instance be caused or triggered to be associated with the shipment by the first apparatus or by the sender associated with the first apparatus. This may for instance result in a label bearing the first information (e.g. in plain text or as a code, e.g. a barcode) being affixed to the shipment. This enables further entities involved in the process of delivering the shipment, such as the second apparatus 2 and the third apparatus 3, to obtain the first information.

The first information may furthermore comprise information that indicates to further entities involved in the process of delivering the shipment, such as the second apparatus 2 and/or the third apparatus 3 and/or the respective entities associated with them, that the shipment does not (yet) show delivery-related information as such, but that the first information associated with the shipment can be used, with second information, to obtain or derive delivery-related information for the shipment. This information may take the form of a pre-defined code or symbol. This information may for instance have a different format as compared to the rest of the first information. For instance, the information may be a symbol (like for instance "A" for anonymous delivery), which may for instance be printed on the shipment or on a label of the shipment, whereas the rest of the first information may be included into a code, such as for instance a barcode, which may be optimized for machine-reading. The first information may additionally or alternatively contain a communication address of the providing apparatus 4 so that the second apparatus 2 and/or the third apparatus 3 know which apparatus to contact to obtain the second information. Alternatively, a communication address of the providing apparatus 4 may be stored in second apparatus 2 and/or third apparatus 3.

In case of unattended delivery devices, the delivery-related information may optionally (e.g. in addition to a delivery address) further comprise information required to get access to the unattended delivery device, e.g. in the form of a code or other authorization information. A delivery-related information may then for instance only be considered complete if it contains both a specification where the unattended delivery device can be found by the deliverer as well as information required to get access to the unattended delivery device.

System 5 further comprises a second apparatus 2. Second apparatus 2 constitutes an example embodiment of an apparatus according to the second aspect of the present invention. This may for instance be an apparatus that is associated with an entity that is involved in the process of delivering the shipment according to delivery-related information (e.g. to a delivery address). The apparatus may for instance be a computer, e.g. a server or a handheld computer. The entity may for instance inter alia be any station passed by a shipment during its delivery according to delivery-related information, in particular a freight centre (e.g. an inward or outward freight centre) or a distribution center (e.g. a center where deliverers are based and start their daily tours to deliver the shipments to their final delivery addresses). A further example of an entity involved in the process of delivering the shipment according to delivery-related information is a deliverer (e.g. the last-mile-deliverer), and an example of a second apparatus associated with a deliverer is a handheld electronic device used to scan or otherwise capture information from shipments, e.g. for delivery confirmation and/or tracking purposes. It is to be noted that second apparatus 2 may also be representative of a plurality of apparatuses or components that jointly perform a task, in particular a task as described by an exemplary embodiment of a method according to the second aspect of the present invention.

The second apparatus 2 is configured to obtain the first information (e.g. by capturing it from the shipment, in particular from its label) and is further configured to obtain second information from the providing apparatus 4. The second information may for instance be third information or fourth information.

The third information is a representation of at least a part of the delivery-related information. Therein, the term "representation of at least a part of the delivery-related information" is understood to cover the (unchanged) at least a part of the delivery-related information itself, as well as differing versions of the at least a part of the delivery-related information, which versions are for instance less accurate (e.g. resolve a delivery address with less accuracy compared to the resolution of the delivery address comprised in the delivery-related information stored at the providing apparatus 4). In many cases, the third information may be at least a part of the delivery-related information. The representation of at least a part of the delivery-related information may also be an encrypted representation of at least a part of the delivery-related information, or an at least partially encrypted representation of at least a part of the delivery-related information (e.g. a representation where not all parts of the at least a part of the delivery-related information are encrypted).

The fourth information is useable for deriving, from at least a part of the first information, a first representation of at least a part of the delivery-related information. The fourth information may thus for instance be one or more keys that can be used to decrypt at least a part of an encrypted delivery-related information.

The second information may for instance be provided to the second apparatus 4 upon request of the second apparatus 2, e.g. in response to a request of the second apparatus 2 that contains at least a part of the first information (e.g. a part that contains an identifier linked to a delivery-related information). The reception of the second information pertaining to a shipment at the second apparatus 2 may thus only take place after the first information pertaining to this shipment has been received at the second apparatus 2. In exemplary embodiments of the present invention, the second information, although being used to obtain at least a part of a delivery-related information of a shipment, is however received at the second apparatus independent from the first information pertaining to this shipment. For instance, the second information may be a (cryptographic) key that is useable by the second apparatus 2 for many shipments. This key may for instance be provided to the second apparatus during a registration of the second apparatus 2 at the providing apparatus 4. The key may for instance be updated (e.g. by the providing apparatus 4) in regular or irregular intervals.

It is the aim of apparatus 2 to obtain or derive, based on the first information and/or the second information, a first representation of at least a part of the delivery-related information. In particular, this first representation of at least a part of the delivery-related information shall enable the second apparatus to further process the shipment in the process of delivering the shipment according to the delivery-related information (e.g. to the delivery address), e.g. to forward the shipment to the next entity involved in the process or to actually finalize the delivery at the delivery address by handing over the shipment to the recipient or by delivering the shipment into an unattended delivery device associated with the recipient.

In the system 5 of Fig. 1, further an optional third apparatus 3 is shown. The third apparatus 3 may, like the second apparatus 2, be associated with an entity that is involved in the process of delivering the shipment according to the delivery-related information. The third apparatus 3 is configured to receive sixth information from the providing apparatus 4, and to obtain either first information or fifth information. The sixth information, which may include seventh or eighth information, functionally resembles the second information (and respectively the third and fourth information that the second information may be). However, the sixth information may enable the third apparatus 3 to obtain or derive a second representation of at least a part of the delivery-related information that has a higher degree of accuracy and/or completeness than the first representation of at least a part of the delivery-related information obtained or derived by the second apparatus 2. For instance, if the delivery-related information comprises the delivery address to which the shipment shall be delivered, the second information may enable the second apparatus 2 to obtain/derive only a representation of the delivery address that does not contain the name and the house number, whereas the sixth information may enable the third apparatus 2 to obtain/derive a representation of the entire delivery address including the name and the house number. In this example, the second apparatus 2 may for instance be associated with a freight centre (e.g. as a computer in this freight centre), and the third apparatus 3 may for instance be associated with a last-mile deliverer (e.g. as a handheld electronic device of the deliverer).

In the example embodiment where a second apparatus 2 and a third apparatus 3 are deployed, the first information may for instance comprise the delivery-related information in encrypted form. The delivery-related information may for instance be divided into two parts. For instance, if the delivery-related information comprises the delivery address to which the shipment shall be delivered, a first part of the delivery-related information is a low-accuracy part that may for instance comprise the country, city, zip code and street information. A second part of the delivery-related information may then be a high-accuracy part that may for instance comprise the house number and the name of the recipient. The first and second parts of the delivery-related information may then for instance be encrypted with a first and second key, respectively. The first key is for instance provided (as fourth information) to the second apparatus 2 (and optionally, as eighth information, also to the third apparatus 3), and the second key is for instance only provided (as eighth information) to the third apparatus 3. Therein, the third apparatus obtains, besides the sixth information, either the first information, e.g. as associated with the shipment by the first apparatus 1, or fifth information, that may for instance have been associated with the shipment by the second apparatus 2. The fifth information may for instance equal the first information. Alternatively, the fifth information may for instance have a different format than the first information. It may then nevertheless still contain the same information as the first information. The fifth information may for instance comprise at least a part of the first information. The fifth information may for instance comprise at least a part of the second information (obtained from the providing apparatus 4). This at least a part of the second information may for instance be an encrypted representation of at least a part of the delivery-related information. This representation may then for instance be decryptable at the third apparatus 3 based on the eighth information obtained from the providing apparatus 4.

It should be noted that presence of the third apparatus 3 in the system 5 of Fig. 1 is optional and only for presentation purposes. In example embodiments of the invention, the second apparatus 2 obtains/derives the complete delivery-related information (e.g. the complete delivery address) and provides this delivery-related information to next entities in the delivery chain to enable these entities to respectively forward the shipment to the respective next entity and finally, the recipient. In other example embodiments, there may be two (as shown in Fig. 1), three or even more apparatuses according to the second aspect of the present invention (like the second apparatus 2 and the third apparatus 3).

In example embodiments of the present invention, the providing apparatus 4 controls (and in particular limits) the exposure of the delivery-related information. A sender of the shipment (associated with apparatus 1) is only provided with first information that does not allow the sender or apparatus 1 to learn at least the complete delivery-related information (e.g. the complete delivery address), or does not allow the sender or apparatus 1 to learn any details of the delivery-related information (e.g. any details of the delivery address). However, the first information enables the sender to trigger the delivery process for the shipment, e.g. by labelling the shipment with the first information and inserting the labelled shipment into the delivery process. Entities involved in the delivery process are, in contrast to the first apparatus, provided (via associated apparatuses such as the second apparatus 2 or the third apparatus 3) with second/sixth information that either contains at least parts of the delivery-related information (or even the entire delivery-related information) or allows to derive at least parts of the delivery-related information (or even the entire delivery-related information).

Depending on different deployment scenarios, different types of the first information can be chosen. For instance, if the first information contains the delivery-related information in encrypted form, the delivery-related information can no longer be changed (e.g. in response to a request of the recipient to change the delivery-related information) after the first information has been provided to the first apparatus. However, it is possible to use fourth/eighth information (decryption keys) that have been provided to the second/third apparatus 2/3 before, e.g. during the registration of the second/third apparatuses 2/3 at the providing apparatus 4, so that no reception of the fourth/eighth information at the second/third apparatus 2/3 after obtaining of the first/fifth information is necessary. This may for instance be particularly advantageous if the second apparatus 2 or the third apparatus 3 are portable electronic devices, for which complete radio coverage (required for communication with the providing apparatus 4) may not be present for all delivery addresses occurring.

On the other hand, if the first information contains parts of the delivery-related information, this delivery-related information can be changed in the providing apparatus 4 (e.g. upon request by the recipient of the shipment, or if the shipment shall be delivery into a lockable compartment of a vehicle that is still moving to some extent during the delivery process) even after the first information has been provided to the first apparatus 1, and depending on the change made, also even after the second information has been provided to the second apparatus 2 (e.g. if the part of the delivery-related information provided to the second apparatus 2 is not affected by the change of the delivery-related information).

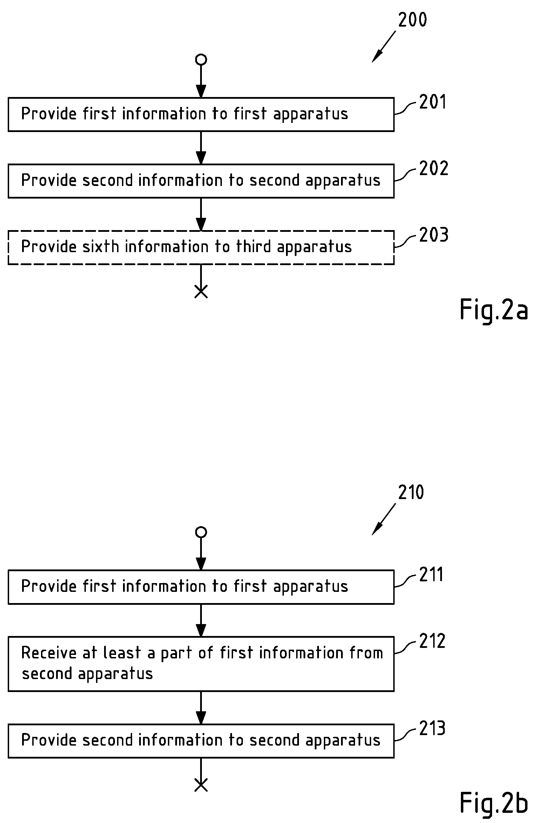

In the following, example embodiments of methods according to the first, second and third aspect of the invention will be described with reference to Figs. 2a-5b, which may be performed by the providing apparatus 4, the second/third apparatus 2/3 and the first apparatus 1, respectively.

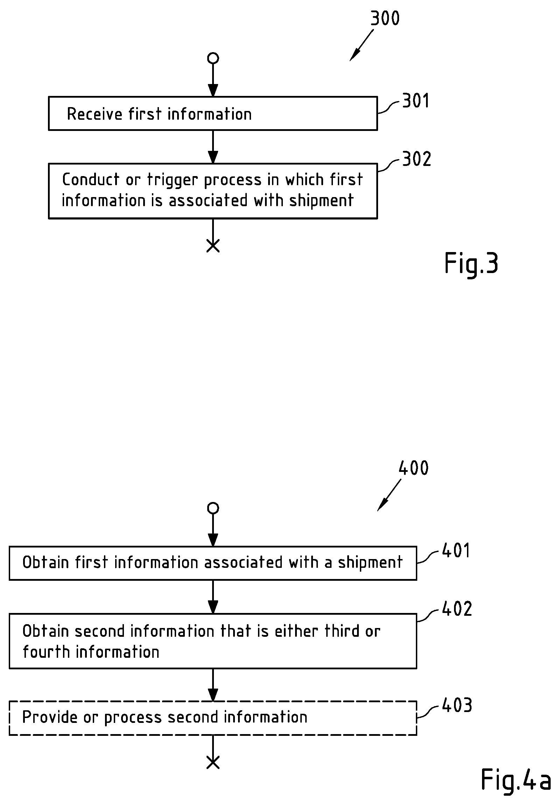

Fig. 3 is flowchart 300 of an example embodiment of a method according to the third aspect of the present invention. The actions of this flowchart 300 may for instance be performed by the first apparatus 1 of Fig. 1.

In a step 301, first information is received at first apparatus 1 that is associated with a sender of a shipment. The first information may for instance be received via electronic communication, e.g. based on a wire-bound or at least partially wireless communication. The first information may for instance be received from the providing apparatus 4, e.g. based on a connection that is based on the Internet Protocol (IP).

In a step 302, a process is conducted or triggered (e.g. by first apparatus 1 or by the sender), in which the first information is associated with the shipment and thus becomes obtainable by second apparatus 2 associated with an entity that is involved in a process of delivering the shipment according to delivery-related information (e.g. to a delivery address). The first information may for instance be associated with the shipment by printing the first information on the shipment or on a label that is affixed to the shipment, or by storing the first information into an electronic storage medium (e.g. forming a part of a transponder or chip) associated with the shipment. Alternatively, the shipment may be logically associated with the first information, i.e. by including the first information into a data record (e.g. of a manifest document) that is linked with the shipment by other means, e.g. by an identifier that is included in the data record and also associated, e.g. printed on or stored in, the shipment. The process in which the first information is associated with the shipment may for instance be triggered in response to the reception of the first information. The process may for instance be a process in which a product that has been purchased is packaged and prepared for shipping to produce the actual shipment that can then be handed over to a delivery company. In step 302, also the process of delivering the shipment according to delivery-related information may be triggered.

Therein, the first information has one of the following properties:
- at least a part of the first information can be provided by the second apparatus 2 to another apparatus (e.g. to providing apparatus 4) to allow the other apparatus to select third information, which is a first representation of at least a part of the delivery-related information and which is to be provided to the second apparatus 2, or
- from at least a part of the first information, a first representation of at least a part of the delivery-related information can be derived at the second apparatus 2 using fourth information.

Therein, the first apparatus 1 and the sender are in particular neither authorized to obtain the third information nor the fourth information, so that neither the first apparatus 1 nor the sender can obtain, from or by using the first information, at least the first representation of at least a part of the delivery-related information.

This lack of authorization may in particular pertain to an authorization vis-à-vis the providing apparatus 4, which may for instance demand a proof authorization from a requestor (like apparatus 1) as a necessary condition for providing the third or the fourth information to the requestor. Such a proof authorization may for instance be provided by the requestor by providing one or more credentials (e.g. a login and a password) to the providing apparatus 4. The credentials may for instance only be available to the requestor if the first apparatus has successfully registered with the providing apparatus 4 before. This registration may for instance comprise a check of the type of the requestor, and it may for instance be determined by the providing apparatus 4 that the first apparatus 1 (as requestor) cannot obtain such credentials or only obtains credentials that only entitle to obtain first information, but not to obtain third or fourth information. In contrast, a second apparatus 2 may obtain such credentials entitling to obtain third or fourth information. Alternatively, a proof of authorization may be provided by a requestor by proving knowledge of a secret (e.g. a secret key), e.g. in the context of a challenge-response mechanism where the first apparatus 1 applies the secret to a challenge received from the providing apparatus 4 and returns the resulting response to the providing apparatus 4 for checking.

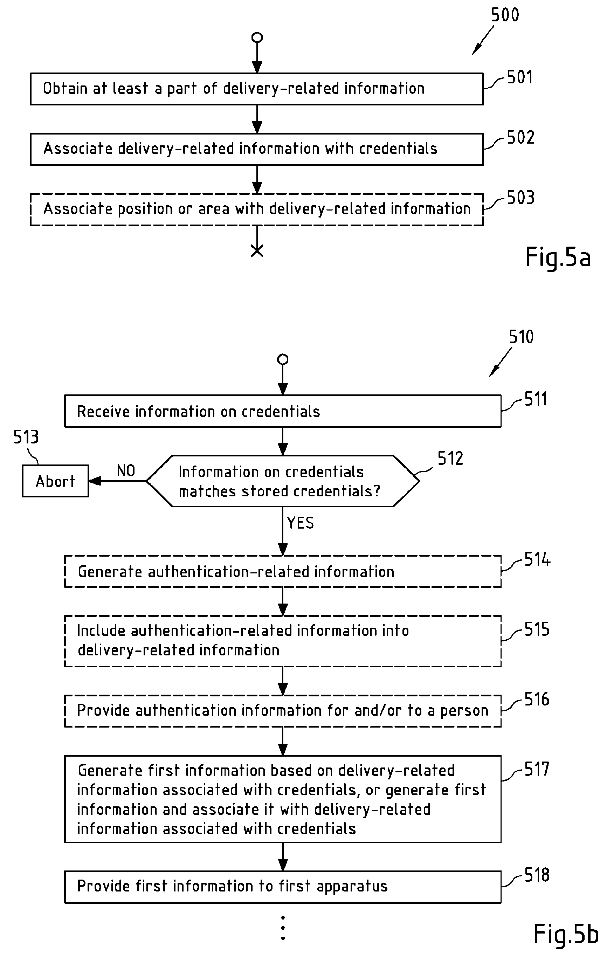

Figs. 2a-2e are flowcharts of example embodiments of a methods according to the first aspect of the present invention. Figs. 5a and 5b are flowcharts of methods that may form part of an example embodiment of the method according to the first aspect of the invention.

The actions of these flowcharts may for instance be performed by the providing apparatus 4 of Fig. 1

In the example embodiment of a method according to the first aspect of the invention according to Fig. 2a, in a step 201, first information is provided (e.g. transmitted) to a first apparatus 1 associated with a sender of a shipment. As already described above with reference to Fig. 3, the first information can be caused, by the first apparatus 1 or the sender, to become associated with the shipment and thus obtainable by a second apparatus 2 associated with an entity that is involved in a process of delivering the shipment according to delivery-related information.

In a step 202, second information is provided (e.g. transmitted) to the second apparatus 2. The second information is either third information that is a first representation of at least a part of the delivery-related information selected at least based on at least a part of the first information, or is fourth information that is useable for deriving, from at least a part of the first information, a first representation of at least a part of the delivery-related information.

The second information is in particular neither provided by the providing apparatus 4 to the first apparatus 1 nor to the sender. The providing apparatus 4 is in particular configured so that the second information is neither provided to the first apparatus 1 nor to the sender, e.g. by requiring an authorization from any requestor that requests the second information, which authorization is not given to the first apparatus 1 and the sender. In this way, neither the first apparatus 1 nor the sender can obtain, from or by using the first information, at least the first representation of at least a part of the delivery-related information, so that the exposure of the delivery-related information is advantageously limited compared to prior art scenarios where the delivery-related information (in particular the delivery address) is always completely known to the first apparatus 1 and/or the sender.

According to example embodiments of the method according to the first step of the present invention (including the embodiment of Fig. 2a), the first apparatus 1 and the sender cannot obtain any information on the delivery-related information (in particular any information on the delivery address) from or by using the first information or can only obtain a representation of the delivery-related information (in particular the delivery address) having a level of accuracy and/or completeness that is lower than a level of accuracy and/or completeness of a representation of the delivery-related information required to complete the process of delivering the shipment.

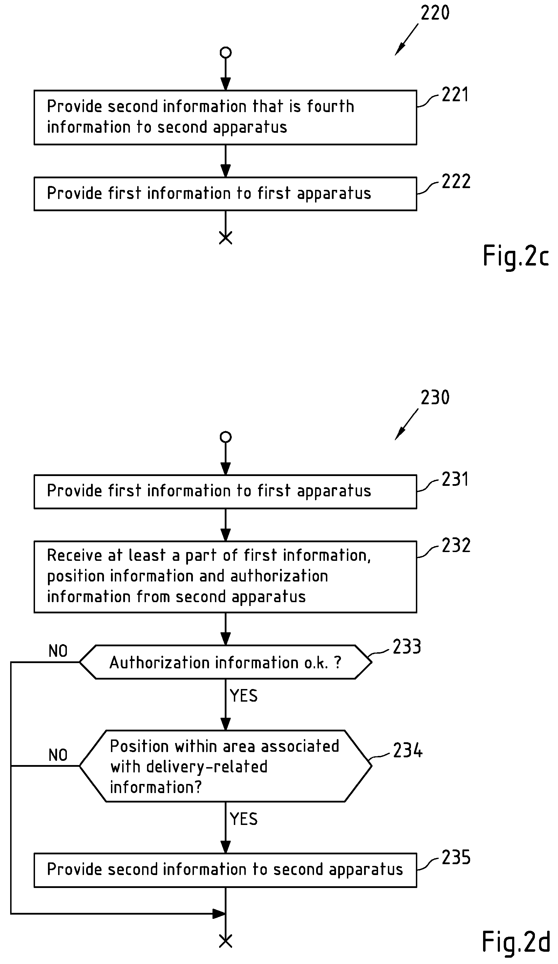

The providing of the second information to the second apparatus 2 according to step 201 may for instance be direct or indirect (e.g. via one or more intermediate entities). The providing may for instance take place only once (in particular if the second information is fourth information, such as for instance a key), e.g. during provisioning or the second apparatus 2 or when the second apparatus 2 registers with providing apparatus 4. The sequence of steps 201 and 202 in Fig. 2a may then be reversed, as it is exemplarily shown in Fig. 2c. The second information may then for instance be independent of the first information in a sense that it is already available at the second apparatus 2 before the second apparatus obtains the first information. It may nevertheless advantageous to update the second information (e.g. by sending new second information from the providing apparatus 4 to the second apparatus 2) from time to time, e.g. on a regular basis or triggered by other events (e.g. based on a number of usages of the second information). The second information may then for instance be furnished with a version identifier and provided to the second apparatus 2. This version identifier may then also be provided with the first information so that the second apparatus 2 can select the correct second information required to derive the first representation of at least a part of the delivery-related information from the first information.

Alternatively, the providing of the second information to the second apparatus 2 may for instance take place each time a new first information pertaining to a shipment that is to be handled by the second apparatus 2 or by the entity associated with the second apparatus 2 is provided to a first apparatus 1.

Step 202, i.e. the provision of second information to the second apparatus 2 may be bound to a proof of authorization of the second apparatus 2 and/or of the entity associated with the second apparatus 2 and/or of software of the second apparatus 2 to receive the second information. This proof of authorization may, as already explained above, for instance be bound to credentials (that were for instance fixed in a registration process at the providing apparatus 4) or other kinds of authentication.

Additionally or alternatively, also the integrity of a software of the second apparatus 2 may have to be proven to the providing apparatus before the second information is provided to the second apparatus 2.

In an optional step 203 of Fig. 2a, also sixth information is provided to the third apparatus 3. This step may for instance be performed if the system 5 of Fig. 1 comprises the third apparatus 3, as already described above. The sixth information enables the third apparatus 3 to request or derive a second representation of at least a part of the delivery-related information, which second representation is for instance more accurate/complete than the first representation or provides the third apparatus with a more accurate/complete knowledge of the delivery-related information compared to the knowledge that the third apparatus had before obtaining/deriving the second representation.

As already pointed out with respect to step 202 of Fig. 2a, the second information is either third information that is a first representation of at least a part of the delivery-related information selected at least based on at least a part of the first information, or is fourth information that is useable for deriving, from at least a part of the first information, a first representation of at least a part of the delivery-related information. In this latter case where the second information is fourth information, the fourth information (e.g. a decryption key) may for instance have been selected at the providing apparatus 4 at least based on at least a part (e.g. an identifier) of the first information.

For both realizations of the second information (third or fourth information), the part of the first information based on which the third or fourth information is selected may have been provided (e.g. transmitted) to the providing apparatus 4 by the second apparatus 2.

Accordingly, Fig. 2b shows a further example embodiment of a method 210 according to the first aspect of the present invention. Therein step 211 corresponds to step 201 of Fig. 2a. In step 212, however, at least a part of first information is received from the second apparatus 2. This part may for instance comprise an identifier enabling the providing apparatus to select a second information (third/fourth information) that fits the received identifier. For instance, the identifier may allow to select a data record at providing apparatus 4 that contains a delivery-related information from which portions (third information) or for which a decryption key (fourth information) has to be provided to the second apparatus 2.

In step 213, which corresponds to step 202 of Fig. 2a, the second information is then provided to the second apparatus. Fig. 2b may further comprise the optional step 203 of Fig. 2a.

Fig. 2c shows an example embodiment of the method 220 according to the first aspect of the present invention where the second information is provided to the second apparatus 2 (step 221) before the first information is provided to the first apparatus 1 (step 222). Again, an optional step 203 as in Fig. 2a may be present here as well. It has already been described above that there may be scenarios where the second information, e.g. in the form of fourth information, in particular in the form of a decryption key, can be provided to the second apparatus 2 before the second apparatus 2 is even able to obtain the first information to which the second information can then be applied to derive a representation of at least a part of the delivery-related information.

In example embodiments of the method according to the first aspect of the present invention, at least the first representation of at least a part of the delivery-related information (obtained or derivable by the second apparatus 2) enables the second apparatus 2 or the entity associated with the second apparatus to forward the shipment to a further (e.g. remote) entity involved in the process of delivering the shipment, or to deliver the shipment (e.g. to a delivery address comprised in the delivery-related information). The entity associated with the second apparatus 2 may for instance be a freight centre, and the further entity may for instance be a further freight centre or a deliverer, to name but a few examples.

In example embodiments of the method according to the first aspect of the present invention, it is a necessary condition for the providing of the second information to the second apparatus 2 and/or for a use of the second information by the second apparatus 2 that a geographical position of the second apparatus is within a pre-defined area associated with the delivery-related information (e.g. associated with a delivery address comprised by the delivery-related information).

It may thus for instance be checked at the providing apparatus 4 if the position of the second apparatus is within the pre-defined area. The second information is then for instance only provided to the second apparatus 2 only if this condition (and potentially further condition, such as for instance a proper authorization of the second apparatus 2) holds. Alternatively, it may be checked at the second apparatus 2 if this condition (and potentially further conditions) holds, and the second information (either obtained at the second apparatus 2 after the obtaining of the first information or before) may then only be used by the second apparatus 2, e.g. for deriving the first representation of at least a part of the delivery-related information, if this condition (and the potential further conditions) holds. This restricted use of the second information may for instance be safeguarded on the second apparatus 2 by a tamper-resistant (e.g. signed) software.

The position of the second apparatus 2 may for instance be the position of the second apparatus 2 at an instant of time when the second apparatus requests the second information from the providing apparatus 4 or receives the second information from the providing apparatus 4, to name but a few examples.

The position may for instance be determined by the second apparatus 2, or may be requested (by the second apparatus 2 or by the providing apparatus 4) from another entity that offers localization services. The position may for instance be determined based on a Global Navigation Satellite System (GNSS), like for instance the Global Positioning System (GPS), the Galileo System, the GLONASS system or the BeiDou Navigation Satellite System, to name but a few examples. The position may alternatively be determined based on cellular or WLAN-based positioning techniques that are based on knowledge of the locations of cellular base stations or WLAN access points that can currently be "heard" by an apparatus that is to be positioned.

The pre-defined area associated with the delivery-related information may for instance be an area around a delivery address comprised by the delivery-related information, e.g. a circle with a pre-defined radius such as for instance 1 km, 2 km, 5 km or 10 km, to name but a few non-limiting examples. The pre-defined area may for instance also be specified based on a zip code, i.e. as the region covered by the zip code. The pre-defined area may for instance be associated with the delivery-related information when the delivery-related information or at least a part thereof is registered with the providing apparatus 4, or when the first information is generated and/or provided by the providing apparatus 4 to the first apparatus 1. Information on the pre-defined area may for instance be provided to the first apparatus 1 (e.g. within or together with the first information, e.g. in encrypted form) and/or to the second apparatus 2 (e.g. within or together with the second information), e.g. to enable the second apparatus to check whether the position of the second apparatus 2 is within the pre-defined area.

The pre-defined area may for example correspond to or be derivable from a representation of at least a part of the delivery-related information that is already known by the second apparatus without having to receive the second information, for instance because this representation of at least a part of the delivery-related information is associated with the shipment received by the second apparatus 2 (e.g. from a previous entity in the delivery chain), e.g. is printed on the shipment or on a label thereof. This representation may for instance have been derived by another entity from the first information or may have been contained in the first information in non-encrypted form.

In example embodiments of the present invention, a proper authorization of the second apparatus 2 and/or of the entity associated with the second apparatus 2 and/or of a software of the second apparatus 2 may be a further necessary condition for the provision of the second information to the second apparatus 2.

Fig. 2d shows a further example embodiment of a method 230 according to the first aspect of the present invention that includes some of the features discussed above.

In a step 231, first information is provided to the first apparatus 1. In step 232, at least a part of first information (e.g. an identifier), position information (for instance pertaining to the position of the second apparatus 2) and authorization information (for instance proving an authorization of the second apparatus to receive the second information) is received.

In a step 233, it is checked if the authorization information is in order, i.e. if the second apparatus 2 can be considered to be authorized to receive the second information. This may for instance be the case if credentials provided by the second apparatus 2 match credentials stored by providing apparatus 4, or if second apparatus 4 has proven that he has a secret that corresponds to a secret known to providing apparatus 4. If the check in step 233 yields a negative result, the flowchart 230 jumps to its end. Otherwise, it is checked in a step 234 if the position information reveals that the position of the second apparatus 2 is within the pre-defined area associated with the delivery-related information. If this is not the case, the flowchart 230 jumps to its end. Otherwise, the second information is provided to the second apparatus in a step 235.

As already mentioned in the context of the description of Fig. 1 above, in example embodiments of the present invention, the method according to the first aspect of the present invention further comprises providing, to a third apparatus 3, sixth information, wherein the sixth information is either seventh information that is a second representation of at least a part of the delivery-related information selected at least based on at least a part of the first information or of fifth information that has been associated with the shipment by the second apparatus or by the entity associated with the second apparatus, or is eighth information that is useable for deriving, from at least a part of the first information or of the fifth information, a second representation of at least a part of the delivery-related information. Concerning the description of the seventh and eighth information, it is referred to the description of the third and fourth information above, respectively, since their description can be applied to the seventh and eighth information analogously.

The sixth information is in particular not made available to the first apparatus, the sender, the second apparatus and the entity associated with the second apparatus, so that none of them can obtain, from or by using the first information or the fifth information, at least the second representation of at least a part of the delivery-related information. This allows, for instance, not to reveal any delivery-related information (the first representation of at least a part of the delivery-related information) to the first apparatus and to only reveal delivery-related information (the second representation of at least a part of the delivery-related information) to the second apparatus that differs from the delivery-related information revealed to the third apparatus.

It may for instance be a necessary condition for the providing of the sixth information to the third apparatus and/or for a use of the sixth information by the third apparatus that a geographical position of the third apparatus is within a pre-defined area associated with the delivery-related information. In this respect, it is referred to the description concerning the position-dependent provision of the second information to the second apparatus provided above, which can be applied to the position-dependent provision of the sixth information analogously (in particular, but not limited to, the determination of the position at the providing apparatus 4 or at the third apparatus 3, the definition of the pre-defined area, etc.).

Furthermore, proper authorization of the third apparatus 3 and/or of the entity associated with the third apparatus 3 and/or of a software of the third apparatus 3 may be a further necessary condition for the provision of the sixth information to the third apparatus.

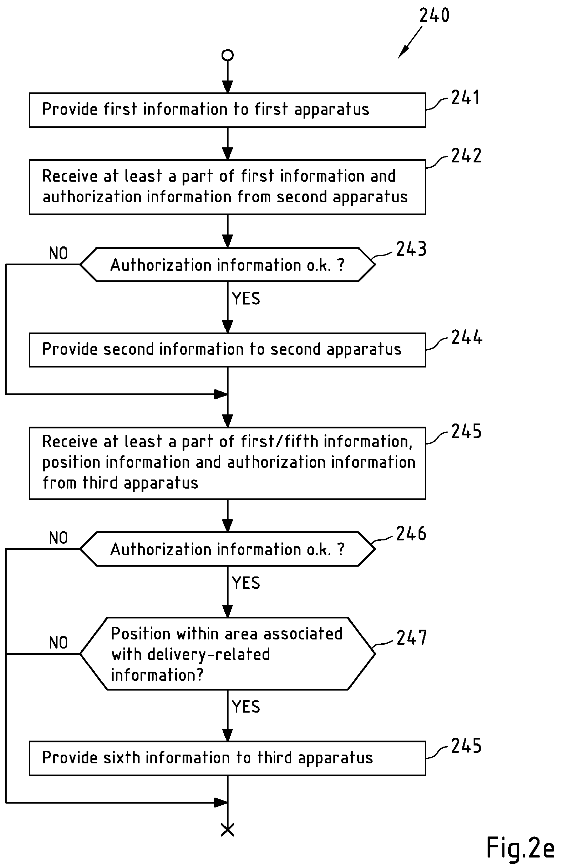

Accordingly, Fig. 2e now shows a further example embodiment of a method 240 according to the first aspect of the present invention, according to which the system 5 of Fig. 1 comprises a second apparatus 2 and a third apparatus 3, both of which receive information from the providing apparatus 4 that contains or allows to derive different representations of at least a part of the delivery-related information, respectively. The method of Fig. 2e may for instance take place in a scenario where the second apparatus 2 is an outward freight centre where a shipment associated with the first information is received from a sender of the shipment, and the third apparatus 3 is an electronic device of a deliverer of the shipment.

In a step 241, first information is provided to the first apparatus 1. In step 242, then at least a part of the first information (e.g. an identifier) and authorization information (for instance proving an authorization of the second apparatus to receive the second information) is received. In step 243 it is checked if the authorization information is in order, and only under this necessary condition the step 244, in which the second information is provided to the second apparatus 2, is performed.

In step 245, at least a part of the first information (or of fifth information), position information (for instance pertaining to the position of the third apparatus 3) and authorization information (for instance proving an authorization of the third apparatus to receive the sixth information) is received from the third apparatus 3.

In step 246, it is checked if the authorization information received in step 245 is in order, and only if this is the case, step 247 is executed, in which it is checked if the position information reveals that the position of the third apparatus 3 is within the pre-defined area associated with the delivery-related information. If this is the case, step 248 is performed, and the sixth information is provided to the third apparatus. Otherwise, step 248 is skipped and the flowchart 240 terminates. It is readily apparent that steps 246 and 247 could be interchanged in sequence.

From this example, it can be seen that different types of information (second information / sixth information) allowing obtaining/deriving different representations of at least a part of the delivery-related information can be provided by the providing apparatus 4 to different apparatuses 2 and 3. Apparatuses 2 and 3 respectively obtain or derive these different (first/second) representations at least partially based on the first information, which is provided by the providing apparatus 4 to the first apparatus 1, but which does not enable the first apparatus 1 to obtain or derive any of these different representations (or even any details of the delivery-related information at all). The first representation may for instance be a representation that does only comprise the country, city, zip code and street portions of a delivery address comprised by the delivery-related information, whereas the second representation either contains the entire delivery address or contains at least the house number and the name of the recipient.

In exemplary embodiments of a method according to the first aspect of the present invention, the method further comprises associating the delivery-related information, which has at least partially been provided by a person, with credentials of the person, wherein it is a necessary condition for the providing of the first information to the first apparatus that information matching the credentials of the person has been provided.

Fig. 5a shows an according flowchart 500 that may for instance be performed by the providing apparatus 4 of Fig. 1, for instance respectively before the steps of the flowcharts shown in Fig. 2a-2e.

In step 501, at least a part of delivery-related information is obtained. This may for instance take place in a session between a computer of the person and the providing apparatus 4. This session has for instance been started by a person who wishes to register itself for a delivery service with limited exposure of the delivery-related information, for instance by navigating with a browser to a website that is associated with providing apparatus 4. Providing apparatus 4 may then for instance request the at least a part of delivery-related information that the person wants to use for the service. The person in turn provides this at least a part of delivery-related information. In step 501, also credentials of the person maybe obtained (e.g. as requested from and provided by the person) or generated (they may then for instance be changed by the person later).

The person may provide only a part of the delivery-related information (e.g. at least the delivery address), or the entire delivery-related information. In the former case, one or more further parts of the delivery-related information may for instance be generated by providing apparatus 4 or may be received by providing apparatus 4 from another entity.

Such one or more further parts may for instance be information required to conduct the delivery, e.g. an electronic key or code required to get access to an unattended delivery device, and/or authentication-related information that allows (e.g. a deliverer or a facility (or its personnel) where a shipment has been deposited for retrieval), based on authentication information provided by a person, to decide whether the person is entitled to receive the shipment or not. Therein, it may for instance be decided that the person is entitled to receive the shipment if the authentication-related information and the authentication information are equal. The authentication-related information may for instance be a password, a code or a parole. The authentication information provided by the person may make other means of authentication that can be used by a user to prove his identity (e.g. an identity card or passport) obsolete. The use of the authentication-related information and the associated authentication information may allow completely avoiding exposure of the person's name to entities involved in the process of delivering the shipment. It may then for instance only be required that a person reveals his/her name towards the providing apparatus 4. Even this requirement may be relaxed by only requiring that a person provides a user name or nick name (instead of his real name) to the providing apparatus 4.

At least one (or all) of the one or more further parts of the delivery-related information may - instead of being generated or received by providing apparatus 4 - be provided to providing apparatus 4 by the person. For instance, the person may (e.g. in addition to the delivery address) provide a key or code that can be used by a deliverer to get access to an unattended delivery device into which the shipment shall be delivered. This is advantageous if the key or code is only known to the person and/or can only be modified by the person. This key or code may then be valid for several deliveries, e.g. until it is changed by the person. Additionally or alternatively, the person may (e.g. in addition to the delivery address) provide to the providing apparatus 4 the above-described authentication-related information. If the authentication-related information is generated by providing apparatus 4, authentication information associated with the authentication-related information (e.g. authentication information that equals the authentication-related information or corresponds to the authentication-related information in a pre-defined manner) is for instance provided to the person by providing apparatus 4, for instance by sending a message (e.g. an email, SMS message or fax, to name but a few examples) to the person that informs the person on the authentication information, and/or by providing the authentication information for retrieval by the person. Such actions may equally well form steps of the flowchart 500 of Fig. 5. Communication of the authentication information to the person is preferably secured to maintain the secrecy of the authentication information. It should be noted that in particular the authentication-related information does not necessarily have to be provided to the providing apparatus 4 or generated by providing apparatus 4 when a person registers at least a part of the delivery-related information with providing apparatus 4. Instead, the authentication-related information may for instance be generated by providing apparatus 4 (or another apparatus that then makes the authentication-related information available to providing apparatus 4) in response to a request for first information, as will be described with reference to Fig. 5b below. This allows to associate new authentication-related information with each new shipment, respectively. In a step 502, the delivery-related information and the person's credentials are associated, for instance by storing them together in a data record at providing apparatus 4. The delivery-related information stored in this data record then forms the basis for the further processing (as explained with respect to the flowcharts of Figs. 2a-2e) of the providing apparatus 4.

In an optional step 503, a position or an area is associated with the delivery-related information (e.g. included into the delivery-related information, or stored in a data record that also contains the delivery-related information). The position may for instance correspond to a delivery address forming part of the delivery-related information, and the area may for instance be defined by a circle around the position of the delivery address with a pre-defined radius, as already described above. The position or area may for instance be used in step 234 of Fig. 2d or in step 247 of Fig. 2e. It may alternatively be provided to the first, second and/or third apparatuses, for instance together with or in the first, second and sixth information, respectively.

In the previously described embodiments of the first aspect of the present invention, where a person provides at least a part of delivery-related information, which delivery-related information is then associated with a person's credentials, the sender may be a seller of a product that is purchased by the person in an online shop associated with the first apparatus, the shipment may be or may be associated with the product, and the first apparatus may direct the person to an apparatus that obtains information from the person and provides the first information to the first apparatus if the provided information matches the credentials of the person.

An according example embodiment of a method 510 according to the first aspect of the present invention is shown in Fig. 5b. The steps of this flowchart 510 may for instance be performed before the steps of the flowcharts of Figs. 2a-2e, but after the steps of the flowchart of Fig. 5a.

In a step 511, information on credentials of a person are received, e.g. from a computer via which a person communicates with providing apparatus 4. In a step 512, it is checked if the credentials on which information was received match any stored credentials (e.g. as stored in step 502 of Fig. 5a). If this is not the case, the method aborts in step 513. Otherwise, flowchart 510 continues. Therein, steps 514-516 are optional and are discussed later.

In step 517, first information is generated based on the delivery-related information associated with the credentials, e.g. by encrypting the delivery-related information to obtain the first information or at least a part thereof. Alternatively, in step 517, first information may be generated and associated with the delivery-related information associated with the credentials, e.g. by creating an identifier as the first information and linking it to the delivery-related information so that, upon later reception of the identifier, the according delivery-related information can be retrieved.

In a step 518, the first information is then provided to the first apparatus (this step is already present in the flowcharts of Figs. 2a-2e).

In example embodiments of the method according to the first aspect of the present invention, the method further comprises obtaining or generating authentication-related information, wherein the authentication-related information forms at least a part of the delivery-related information, and providing authentication information that is associated with the authentication-related information to and/or for a person that is associated with the delivery-related information. The method may for instance further comprise including the authentication-related information into the delivery-related information. The person associated with the delivery-related information may for instance be a person that has provided at least a part of the delivery-related information. The authentication information may for instance be provided to the person via a message (that is e.g. received by a terminal of the person) and/or may be provided for retrieval by the person (e.g. by means of a terminal), for instance on a web page. The authentication-related information may for instance allow (e.g. a deliverer or a facility (or its personnel) where a shipment has been deposited for retrieval), based on authentication information provided by a person, to decide whether the person is entitled to receive the shipment or not, e.g. by checking if the authentication-related information equals the authentication information or corresponds to the authentication information in a pre-defined way.

An according example embodiment of a method according to the first aspect of the present invention is represented by steps 514-416 of flowchart 510 of Fig. 5b.

In a step 514, authentication-related information is generated by providing apparatus 4. The authentication information may for instance be generated randomly, e.g. as a random (e.g. numeric, alphabetic or alphanumeric) code, e.g. a code of pre-defined length. Alternatively, the authentication-related information may be received from another apparatus or entity that created the authentication-related information.

In step 515, the authentication-related information is associated with the delivery-related information, e.g. by including it into the delivery-related information.

In step 516, authentication information that is associated with the authentication-related information is provided for and/or to a person that is associated with the delivery-related information, in particular to the person that registered at least a part of the delivery-related information with the providing apparatus 4. The authentication information may for instance equal the authentication-related information or correspond to the authentication-related information in a pre-defined way. In the latter case, the authentication information may then for instance also be generated or determined in step 514.

In this way, checking of the authenticity of the person that shall finally receive the shipment can be accomplished. The person is provided with the authentication information which can be used by the person to prove his/her authenticity. On the other hand, authentication-related information that is associated with the authentication information (e.g. equals the authentication information) is made available, as part of the first/second representation of at least a part of the delivery-related information) to an entity (e.g. a deliverer or a facility (or its personnel) where the shipment has been deposited for retrieval by the person) so that the entity, if provided with the authentication information by the person, can check if the person is entitled to receive the shipment. Proving the authenticity of the person towards the entity may advantageously solely be based on the authentication information, and not on further means of authentication of the person, such as an identity card, passport etc. The authenticity and thus the entitlement of the person to receive the shipment can thus be checked without a need to reveal the identity (in particular the name) of the person.

For instance, if the entity is the deliverer that shall deliver the shipment to the person, the deliverer can request the authentication information from the person. If the authentication information provided by the person matches the authentication-related information available to the deliverer in a pre-defined way (e.g. if both are equal), the deliverer can be sure that the person is the correct recipient/addressee of the shipment. This is particularly advantageous if the deliverer is in doubt whether a person encountered is entitled to receive the shipment, e.g. because the recipient's name as specified by the delivery address does not match the name on the name plate at the location specified by the delivery address. This may for instance occur if the delivery address uses a "c/o" (care of) component (e.g. in the following form: "Gabi Mustermann c/o Muster GmbH, Lindenstr. 13, 51069 Köln", where the name plate will only bear the name "Muster Gmbh"), or e.g. if a delivery address is at least partially changed (e.g. after the process of delivering the shipment has already started). For instance, a person may originally have registered the delivery address "Gabi Mustermann, Blumenstr. 17, 51069 Köln", but later on has changed the delivery address to "Gabi Mustermann, Parkweg 13, 51069 Köln", e.g. since the person recognized that at the estimated time of delivery of the shipment, she will not be at her home address ("Blumenstr. 17, 51069 Köln") but at her friend's address ("Parkweg 13, 51069 Koln"). If the deliverer then encounters the person at the new address, which will not have the person's name on the name plate, the deliverer can still deliver the shipment to the person if the person authenticates herself with the correct authentication information. Advantageously, the person does then not have to use other means of authentication, such as for instance an identity card or a passport, and the deliverer does not have to verify such other means of authentication.

As another example, if the entity is a facility (or its personnel) where the shipment has been deposited (e.g. by a deliverer) for retrieval by the person for which the shipment is destined, the authentication information may be used by the person to authenticate towards the facility or its personnel

The shipment may for instance have been provided by the deliverer of the shipment to the facility, e.g. due to absence of the person at the time when the deliverer attempted to deliver the shipment to the person directly. The facility may thus for instance be a parcel shop (e,g, a DHL PaketShop). The deliverer may then for instance have left a notification card for the person at the delivery address where delivery of the shipment was not possible, which notification card includes an identification of the facility (e.g. an address of the facility) and optionally an identification of the shipment (e.g. a tracking number). Instead of the notification card, the person may be provided with the identification of the facility and optionally the identification of the shipment via digital communication, e.g. via email or SMS,

Based on the identification of the facility, the person can find the facility and request his shipment. Therein, the shipment may be identifiable at the facility based on the identification of the shipment (as provided to the person e.g. via the notification card or via digital communication) or based on the authentication information. The entitlement of the person to retrieve the shipment may be checked by the facility or its personnel by comparing the authentication information with the authentication-related information. Advantageously, then no other means of authentication (e.g. an identity card or passport) have to be provided by the person and checked by the facility or its personnel. The authentication-related information required by the facility or its personnel to check the person's entitlement to receive the shipment may for instance have been provided to the facility or its personnel by a deliverer that deposited the shipment at the facility and obtained this authentication-related information as part of the first/second representation of at least a part of the delivery-related information, e.g. in one of the exemplary ways described above. Alternatively, the facility or its personnel may represent the second apparatus 2 or the third apparatus 3 (see Fig. 1) and obtain the authentication-related information as part of the first/second representation of at least a part of the delivery-related information themselves (see the flowcharts of Figs. 4a-4f discussed below).

In example embodiments of the present invention, the facility where the shipment is deposited for retrieval by the person (for which the shipment is destined) is specified by the delivery-related information (e.g. in a delivery address comprised by the delivery-related information). Delivery of the shipment may then for instance be considered to be accomplished if the shipment has been deposited at the facility. In this example embodiment, the name or identity of the person may not have to be comprised by the delivery-related information and may not be required for delivering the shipment, so that exposure of the name or identify of the person in the process of delivering the shipment can be completely avoided. The person may use the authentication information to prove his/her entitlement to retrieve the shipment from the facility. The facility may then for instance represent the second apparatus 2 or the third apparatus 3 (see Fig. 1) and obtain - e.g. in response to the depositing of the shipment at the facility, or in response to a request of the person to retrieve the shipment - the authentication-related information (required for checking the authentication information provided by the person) as part of the first/second representation of at least a part of the delivery-related information (see the flowcharts of Figs. 4a-4f discussed below). The exposure of the authentication-related information forming part of the delivery-related information can then advantageously be limited to the facility or its personnel.

In example embodiments of the method according to the first aspect of the present invention, in addition to the first information, also information on a trustworthiness of a person that is associated with the delivery-related information (e.g. a person that has registered at least a part of the delivery-related information with the providing apparatus 4) is provided (by the providing apparatus 4). The trustworthiness may for instance indicate that the delivery-related information (in particular the delivery address) associated with the person is correct and/or that at least one delivery (or at least more than a pre-defined number of deliveries) has already been conducted according to the delivery-related information associated with the person. This information may advantageously allow an entity associated with the first apparatus, e.g. a sender of the shipment, to assess if the delivery service with limited exposure of the delivery-related information according to the present invention shall be allowed or not.

Figs. 4a-4f are flowcharts of exemplary embodiments of methods according to the second aspect of the present invention. The steps of these flowcharts may for instance be performed by the second apparatus 2 or by the third apparatus 3. These flowcharts complement the flowcharts of Figs. 2a-2e describing the exemplary processing at the providing apparatus. Accordingly, the description of Fig. 2a-2e shall be understood to pertain to Figs. 4a-4e as well.

Fig. 4a is a flowchart 400 of an exemplary embodiment of a method according to the second aspect of the present invention. In a step 401, at a second apparatus 2 associated with an entity that is involved in a process of delivering a shipment according to delivery-related information, first information that is associated with the shipment is obtained (e.g. captured optically (e.g. by scanning a barcode), electro-magnetically (e.g. via radio transmission), electrically (e.g. via short-range electrical interaction) or magnetically (e.g. via short-range magnetic interaction such as NFC communication) from a shipment or from an item (e.g. a label or chip) associated with the shipment).

In a step 402, second information that is either third or fourth information is obtained (e.g. received). The third information is a first representation of at least a part of the delivery-related information selected at least based on at least a part of the first information. The fourth information is useable for deriving, from at least a part of the first information, a first representation of at least a part of the delivery-related information.

Therein, in particular the second information is neither made available to the first apparatus nor to the sender, so that neither the first apparatus nor the sender can obtain, from or by using the first information, at least the first representation of at least a part of the delivery-related information.

In an optional step 403, the second information is then provided, e.g. displayed or forwarded (e.g. sent) to another apparatus, or is further processed, e.g. used to derive, from at least a part of the first information, a first representation of at least a part of the delivery-related information.

Fig. 4a thus complements the steps of flowchart 200 of Fig. 2a.

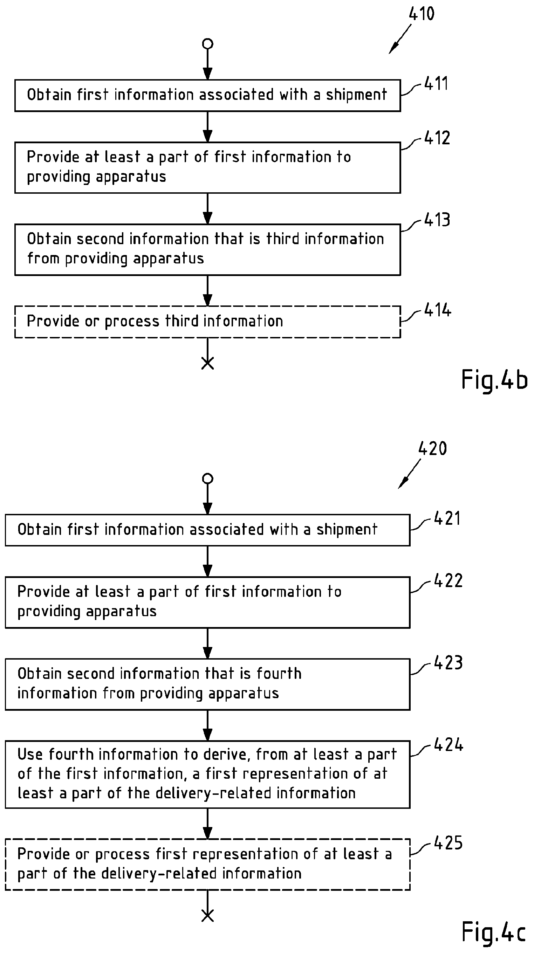

If the second information is the fourth information, the fourth information may be used to derive, from at least a part of the first information, a first representation of at least a part of the delivery-related information (this will be further explained with reference to Fig. 4c below)).

As optional further step of the flowchart 400 of Fig. 4a, the first representation of at least a part of the delivery-related information may be provided or further processed, e.g. forwarded to another apparatus, used for sorting and/or routing and/or (last-mile) delivering of the shipment, printed and/or associated with the shipment, displayed, etc..

For instance, if the second apparatus 2 is a portable electronic device of a deliverer, and if the first representation of at least a part of the delivery-related information contains information required to get access to an unattended delivery device, the deliverer may use this information to get access to the unattended delivery device. For instance, if this information is a code, this code may be entered by the deliverer into a keypad of the unattended delivery device. If this information is authorization information (which may also be a code), this authorization information may for instance be transmitted from the device of the deliverer to the unattended delivery device to grant access to the unattended delivery device for the deliverer.

In example embodiments of the method according to the second aspect of the present invention, at least a part of the first representation of at least a part of the delivery-related information needs to be provided to the unattended delivery device in order to deliver the shipment to the unattended delivery. The method according to the second aspect of the present invention may then further comprise providing at least the part of the first representation of at least a part of the delivery-related information to the unattended delivery device. This may for instance be a code or another authorization information, which for instance grants access to a compartment of the unattended delivery device. The shipment may then for instance be placed into the compartment, and the compartment may then for instance be manually or automatically closed and may then for instance manually or automatically locked. The locked compartment may then store the shipment until it is retrieved by the addressee of the shipment, who may in turn have to present proper authorization to the unattended delivery device.

In the example embodiments of the method according to the second aspect of the present invention where at least a part of the first representation of at least a part of the delivery-related information needs to be provided to the unattended delivery device in order to deliver the shipment to the unattended delivery device, at least a part of the first representation of at least a part of the delivery-related information may for instance comprise information that is required by the second apparatus 2 and/or by the entity (e.g. a deliverer) associated with the second apparatus 2 to identify and/or locate the unattended delivery device where the shipment shall be delivered, and which information was only obtainable or derivable for the second apparatus 2 or the entity associated with the second apparatus 2 based on the second information obtained from the providing apparatus 4. Thus advantageously both identification/localization information pertaining to the unattended delivery device and access information pertaining to the unattended delivery device is contained in the first representation of at least a part of the delivery-related information that is obtained as the third information or derivable by using the fourth information. The problem of keeping the delivery address secret to the extent possible and the problem of providing access information to the deliverer are thus advantageously solved by the same infrastructure and messaging.

Furthermore, the unattended delivery device may be of a type that does, for a delivery of the shipment into the unattended delivery device, not require knowledge of the name of the addressee of the shipment, and the first representation of at least a part of the delivery-related information may then not contain the name of the addressee of the shipment. Neither the second apparatus 2 nor the entity associated with the second apparatus 2 may then for instance be capable, based on the first information and/or the second information, to learn the name of the addressee, so that the name of the addressee of the shipment can be kept completely anonymous throughout the process of delivering the shipment to the delivery-related information.

Non-limiting examples of unattended delivery devices that do not require knowledge of the name of the addressee of the shipment are
- lockable compartments of vehicles (which are for instance identified by vehicle identifiers such as license numbers in case of cars), or
- lockboxes in an apparatus with a plurality of lockboxes (which apparatus is for instance installed in a public place or in an apartment house) where addressees have registered with a remote or local control unit of the apparatus with the plurality of lockboxes and have respectively been assigned an identifier so that it is sufficient for delivery of a shipment to use an addressee's identifier rather than his name (the control unit keeps track of which shipment was delivered for which identifier and can then, upon presentation of an identifier by an addressee seeking to retrieve his shipment from the apparatus with the plurality of lockboxes, grant this addressee access to the lockbox(es) comprising the shipment(s)).

Fig. 4b is a flowchart 410 of an exemplary embodiment of a method according to the second aspect of the present invention. In a step 411, at a second apparatus 2 associated with an entity that is involved in a process of delivering a shipment according to delivery-related information, first information that is associated with the shipment is obtained (e.g. as described for step 401 of Fig. 4a above). In a step 412, then at least a part of the first information (e.g. an identifier) is provided (e.g. transmitted) to the providing apparatus 4. In a step 413, second information that is third information is obtained (e.g. received) from providing apparatus 4. In an optional step 414 the third information is then provided (e.g. displayed or forwarded (e.g. sent) to another apparatus) or further processed (e.g. used to derive, from at least a part of the first information, a first representation of at least a part of the delivery-related information). In this respect, the above description of the optional further step after step 403 of Fig. 4a concerning provision or further processing of the first representation of at least a part of the delivery-related information, in particular with respect to unattended delivery devices, applies here for the third information as well.

Fig. 4b thus complements the steps of flowchart 210 of Fig. 2b (for the case that the second information is the third information).

Fig. 4c is a flowchart 420 of an exemplary embodiment of a method according to the second aspect of the present invention. In a step 421, at a second apparatus 2 associated with an entity that is involved in a process of delivering a shipment according to delivery-related information, first information that is associated with the shipment is obtained (e.g. as described for step 401 of Fig. 4a above). In a step 422, then at least a part of the first information (e.g. a first part of the first information, which may for instance be an identifier) is provided (e.g. transmitted) to the providing apparatus 4. In a step 423, second information that is fourth information (e.g. a decryption key) is obtained (e.g. received) from providing apparatus 4. In step 424, the fourth information is used to derive, from at least a part of the first information (e.g. a second part of the first information, which may for instance be an encrypted version of the delivery-related information or of a part thereof), a first representation of at least a part of the delivery-related information. In an optional step 424 the first representation of at least a part of the delivery-related information is then provided (e.g. displayed or forwarded (e.g. sent) to another apparatus) or further processed. In this respect, the above description of the optional further step after step 403 of Fig. 4a concerning provision or further processing of the first representation of at least a part of the delivery-related information, in particular with respect to unattended delivery devices, applies here for the first representation of at least a part of the delivery-related information as well.

Fig. 4c thus complements the steps of flowchart 210 of Fig. 2b (for the case that the second information is the fourth information).

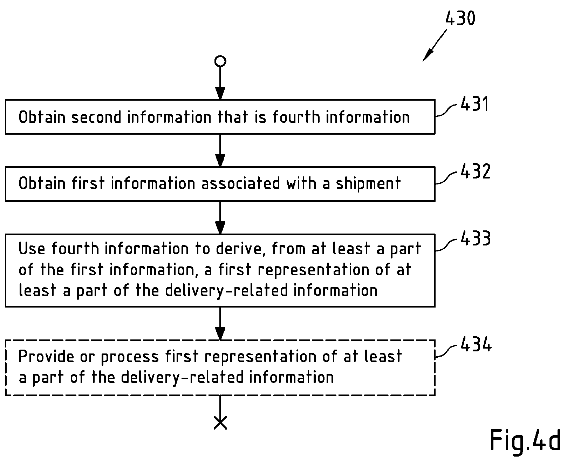

Fig. 4d is a flowchart 430 of an exemplary embodiment of a method according to the second aspect of the present invention. Flowchart 430 differs from flowchart 420 of Fig. 4c in that the second information is obtained before the first information is obtained and in that there is no provision of at least a part of the first information from the second apparatus 2 to the providing apparatus 4. This may for instance be the case if the second information is a decryption key that is provided to the second apparatus during provisioning of the second apparatus or in the context of a registration of the second apparatus 2 at the providing apparatus 4 (and may for instance later be updated as explained above). The flowchart of Fig. 4d thus complements the flowchart 220 of Fig. 2c.

In a step 431, second information that is fourth information (e.g. a decryption key) is obtained (e.g. received) at second apparatus 2 from providing apparatus 4. In a step 432, first information that is associated with the shipment is obtained (e.g. as described for step 401 of Fig. 4a above). In a step 422, then at least a part of the first information (e.g. a first part of the first information, which may for instance be an identifier) is provided (e.g. transmitted) to the providing apparatus 4. In step 424, the fourth information is used to derive, from at least a part of the first information (which may for instance be an encrypted version of the delivery-related information or of a part thereof), a first representation of at least a part of the delivery-related information. In an optional step 434 the first representation of at least a part of the delivery-related information is then provided (e.g. displayed or forwarded (e.g. sent) to another apparatus) or further processed.

In this respect, the above description of the optional further step after step 403 of Fig. 4a concerning provision or further processing of the first representation of at least a part of the delivery-related information, in particular with respect to unattended delivery devices, applies here for the first representation of at least a part of the delivery-related information as well.

In example embodiments of the method according to the second aspect of the present invention, the method further comprises providing, by the second apparatus 2, authorization information to an apparatus that provides the second information (e.g. the providing apparatus 4) to enable the apparatus (e.g. the providing apparatus 4) to decide whether the second apparatus 2 is authorized to receive the second information. This authorization information may for instance be credentials associated with the second apparatus 2 and/or the entity associated with the second apparatus 2, in particular during a registration of the second apparatus 2 and/or of the entity associated with the second apparatus 2 with the providing apparatus 4.

In example embodiments of the method according to the second aspect of the present invention, the method further comprises providing information representative of a geographical position of the second apparatus to an apparatus (e.g. the providing apparatus 4) to enable the apparatus (e.g. the providing apparatus 4) to check a condition that the position of the second apparatus is within a pre-defined area associated with the delivery-related information, wherein this condition is a necessary condition for provision of the second information from the apparatus to the second apparatus.

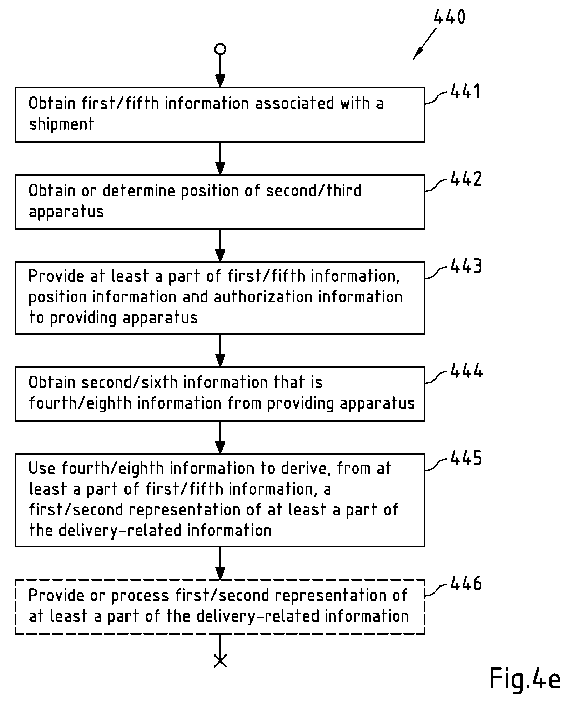

Fig. 4e is a flowchart 440 of an exemplary embodiment of a method according to the second aspect of the present invention that includes some of the example features discussed above. The flowchart 440 of Fig. 4e may for instance be performed by the second apparatus 2 or the third apparatus 3. In the former case, the first, second and fourth information is relevant, wherein in the latter case, the first or fifth information, the sixth and the eighth information is relevant. Fig. 4e thus in particular complements the steps of flowchart 230 of Fig. 2d (for the case that the flowchart 440 is performed by the second apparatus 2 and that the second information is the fourth information), or complements the steps 245-248 of flowchart 240 of Fig. 2e (for the case that the flowchart 440 is performed by the third apparatus 3).

In step 441, first or fifth information associated with a shipment is obtained (e.g. as described for step 401 of Fig. 4a above). In a step 442, then a position of the second/third apparatus is obtained or determined in particular by the second/third apparatus, as described in the context of Fig. 2d above. Information on the position, authorization information and a t least a part (e.g. a first part) of the first/fifth information is then provided (e.g. transmitted) to the providing apparatus 4 in step 443. In step 444, second/sixth information is obtained (e.g. received), which is fourth/eighth information (e.g. a decryption key). In step 445, the fourth/eighth information is then used to derive, from at least a part (e.g. a second part) of the first/fifth information, a first/second representation of at least a part of the delivery-related information. In an optional step 446, then the first /second representation of at least a part of the delivery-related information is provided (e.g. displayed or forwarded (e.g. sent) to another apparatus) or further processed. In this respect, the above description of the optional further step after step 403 of Fig. 4a concerning provision or further processing of the first representation of at least a part of the delivery-related information, in particular with respect to unattended delivery devices, applies here for the first/second representation of at least a part of the delivery-related information as well.

It should be noted that the second/sixth information obtained in step 444 may alternatively be third/seventh information. Step 445 may then not be necessary, and for instance step 446 may be performed with the third/seventh information as the first/second representation of at least a part of the delivery-related information.

In the previously described example embodiment, the check whether the position of the second/third apparatus is within the pre-defined area is performed at the providing apparatus 4. Alternatively, this may be done in the second/third apparatus, as will be described below.

In exemplary embodiments of the method according to the second aspect of the present invention, the second information is the fourth information, and the method further comprises:
- obtaining a geographical position of the second apparatus 2;
- checking a condition that the position of the second apparatus 2 is within a pre-defined area associated with the delivery-related information,
- deriving, from at least a part of the first information, the first representation of at least a part of the delivery-related information using the fourth information, and
- providing or processing the first representation of at least a part of the delivery-related information.

Therein, the condition that the position of the second apparatus is within a pre-defined area associated with the delivery-related information may be a necessary condition for the deriving of the first representation of at least a part of the delivery-related information and/or for the providing or processing of the first representation of at least a part of the delivery-related information.

The first representation of at least a part of the delivery-related information can thus only be derived and/or provided/processed by the second apparatus if the position of the second apparatus 2 is within the pre-defined area associated with the delivery-related information. This can for instance be ensured by a tamper-proof (e.g. signed) software that at least performs the steps of checking the condition and of deriving the first representation of at least a part of the delivery-related information. Furthermore, measures may be taken to exclude that the position is manipulated, for instance by using a certified and/or trustworthy position determining device (e.g. a GNSS receiver) and/or by safeguarding that the position communicated from the position determining device to the software is secure against manipulation, as it is known for a person skilled in the art (e.g. by requiring the position determining device to authenticate towards the software and/or by enabling the software to check the integrity of information received from the position determining device, e.g. by using Message Authentication Codes (MACs)).

In this example embodiment, the position of the second apparatus thus does not have to be provided (e.g. transmitted) to the providing apparatus 4, so that, at least in this respect, the amount of communication can be reduced. If, in addition, the fourth information (e.g. a decryption key) does not have to be requested by the second apparatus 2 from the providing apparatus 4 based on at least a part of the first information, for instance since the fourth information is already available at the second apparatus 2 when the first information pertaining to a shipment is obtained at the second apparatus (e.g. since the fourth information can be used to derive information from first information respectively pertaining to a plurality of shipments), no communication between the second apparatus 2 and the providing apparatus 4 is required during the process of delivering the shipment according to the delivery-related information. The second apparatus 2 thus becomes autarkic from the providing apparatus 4. This is particularly advantageous if the shipment has to be delivered to a delivery address where radio coverage as a necessary condition for communication between the second apparatus 2 and the providing apparatus 4 is not available at all or is only available with low quality and/or coverage. Thus although not communication between the second apparatus 2 and the providing apparatus 4 takes place during the process of delivering the shipment to according to delivery-related information (e.g. to a delivery address comprised in the delivery-related information), it can still be safeguarded that the second apparatus 2 and an entity (e.g. a deliverer) associated with the second apparatus 2 only learns the first representation of at least a part of the delivery-related information (e.g. the house number and name of the recipient/addressee, or a license number of a vehicle into which delivery shall be performed, or access information for accessing an unattended delivery device) only once the position of the second apparatus 2 (and thus also of the entity associated with the second apparatus) is within the pre-defined area associated with the delivery-related information, e.g. close to the delivery address.

It is readily apparent that the above-described example embodiment may equally well be performed by the third apparatus 3 (wherein the first, second and fourth information and the first representation of at least a part of the delivery-related information would then be replaced by the first/fifth, sixth and eighth information and the second representation of at least a part of the delivery-related information, respectively).

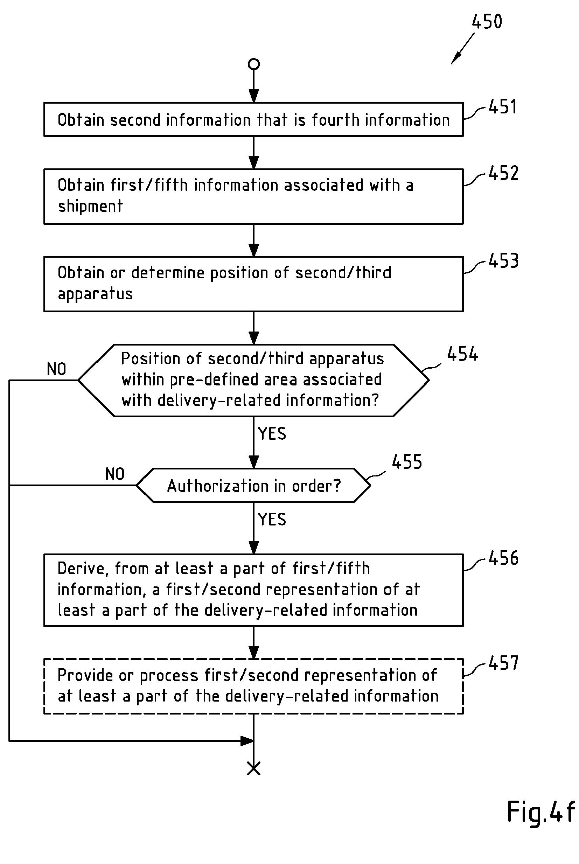

Fig. 4f shows an according flowchart of an example embodiment of a method according to the second aspect of the present invention. In a step 451, second information that is fourth information (e.g. a decryption key) is obtained (e.g. received). This may for instance take place during provisioning of the second apparatus 2 or during registration of the second apparatus 2 at providing apparatus 4. In step 452, first/fifth information is obtained (e.g. captured), as it has for instance be described with reference to step 402 of Fig. 4a. In step 453, a position of the second/third apparatus is obtained (e.g. from an external position determining device) or determined. In step 454, it is checked whether the position of the second/third apparatus is within a pre-defined area associated with the delivery-related information. Information on the pre-defined area may for instance be contained in the first information, for instance in encrypted or non-encrypted form. If the check is positive, step 455 is performed, otherwise, the flowchart 450 terminates. In optional step 455, an authorization of the second apparatus 2 and/or of the entity associated with the second apparatus 2 for deriving the first representation of at least a part of the delivery-related information is checked. The authorization of the second apparatus may for instance be proven by the second apparatus based on a secret or certificate that the second apparatus 2 can for instance present to a software implementing at least the checking step 455 (and potentially further steps such as step 454 for example).The authorization of the entity associated with the second apparatus 2 may for instance be proven by the entity by entering credentials into the second apparatus 2 that may then be checked by a software that at least implements the checking step 455 (and potentially further steps such as step 454 for example). If the check of step 455 is positive, step 456 is performed; otherwise, the flowchart 450 terminates. If step 455 is not present, in case of a positive outcome of the check of step 454, step 456 is performed. In step 456, a first/second representation of at least a part of the delivery-related information is derived from at least a part of the first/fifth information, in particular based on the fourth information. In step 457, the first/second representation of at least a part of the delivery-related information is provided or further processed. In this respect, the above description of the optional further step after step 403 of Fig. 4a concerning provision or further processing of the first/second representation of at least a part of the delivery-related information, in particular with respect to unattended delivery devices, applies here for the first/second representation of at least a part of the delivery-related information as well.

It should be noted that the sequence of steps 454 and 455 in flowchart 450 can be reversed.

It should also be noted that the pre-defined area required in step 454 may be determined by the second apparatus 2 based on the first representation of at least a part of the delivery-related information that is derived from at least a part of the first information and the fourth information. For instance, the first representation of at least a part of the delivery-related information may be the entire delivery-related information, and the pre-defined area may for instance be determined as a circular area having a position identified by the delivery-related information (in particular by a delivery address comprised therein) as a center thereof and exhibiting a pre-defined radius (e.g. 1, 2 or 5 km). The step 456 may then for instance be performed before the step 454. The outcome of the checking of step 454 may then safeguard that the first representation of at least a part of the delivery-related information, although already determined, is not provided (e.g. sent to another apparatus or displayed to an entity associated with the second apparatus 2) or processed by the second apparatus 2 if the position of the second apparatus 2 is not within the pre-defined area (i.e. if the second apparatus 2 is not yet close enough to the delivery address comprised in the delivery-related information).

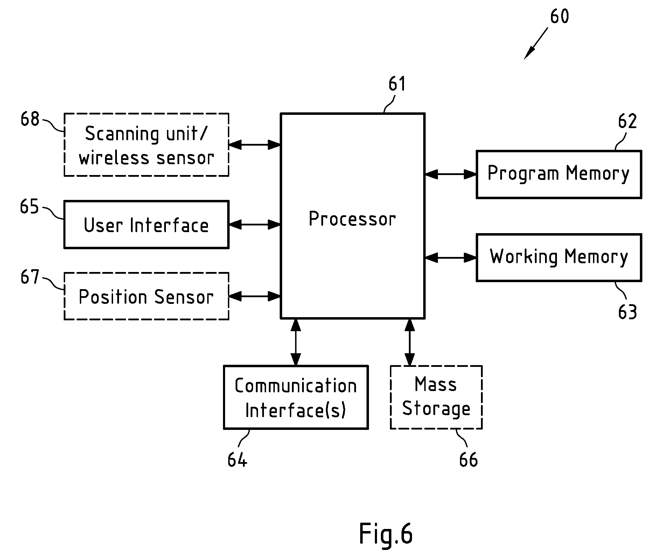

Fig. 6 is a schematic block diagram of an example embodiment of an apparatus 60 according to the first, second or third aspect of the invention. Apparatus 60 may for instance represent at least a part (e.g. a functional unit or module) of the providing apparatus 4, the first apparatus 1, the second apparatus 2 or the third apparatus 3.

Apparatus 60, in its role as an apparatus according to a respective (first/second/third) aspect of the present invention, comprises at least one processor 61 and at least one program memory 62 including computer program code, the at least one memory 62 and the computer program code configured to, with the at least one processor 61, cause an apparatus (for instance apparatus 60, or another apparatus that comprises apparatus 60) at least to perform the method according to a respective aspect of the present invention. Processor 61 for instance executes the computer program code stored in program memory 62. Processor 61 for instance accesses program memory 62 via a bus. The computer program stored in program memory 62 is an example of a computer program according to the respective aspect of the present invention, i.e. a computer program that when executed by processor 61 causes apparatus 60 (or an apparatus that comprises apparatus 60) to perform the actions of the method according to the respective aspect of the invention.

Apparatus 60, in its role as an apparatus according to a respective (first/second/third) aspect of the present invention, is also an example embodiment of an apparatus that is configured to perform or comprises respective means for performing the method according to a respective aspect of the present invention. The processor 61 of apparatus 60 may for instance represent means for performing the method according to a respective aspect of the invention.

Program memory 62 may also be included into processor 61. This memory may for instance be fixedly connected to processor 61, or be at least partially removable from processor 62, for instance in the form of a memory card or stick. Program memory 62 may for instance be nonvolatile memory. It may for instance be a FLASH memory (or a part thereof), any of a ROM, PROM, EPROM and EEPROM memory (or a part thereof) or a hard disc (or a part thereof), to name but a few examples. Memory may also comprise an operating system for processor 62. Program memory 62 may also comprise a firmware for apparatus 60.

In the apparatus 60, further a working memory 63 may be present, for instance in the form of a volatile memory. It may for instance be a Random Access Memory (RAM) or Dynamic RAM (DRAM), to give but a few non-limiting examples. It may for instance be used by processor 61 when executing an operating system and/or computer program.

Processor 61 (and also any other processor mentioned in this specification) may be a processor of any suitable type. Processor 61 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 61 may for instance be an application processor that runs an operating system.

Some or all of the components of the apparatus 60 may for instance be connected via a bus. Some or all of the components of the apparatus 60 may for instance be combined into one or more modules.

Apparatus 60 further comprises one or more communication interface(s) 64 that allow apparatus 60 to communicate with remote devices. The communication interface(s) may for instance comprise interface for wirebound communication and/or an interface for wireless (e.g. radio-based or optical) communication. In the example embodiment of a system according to the invention shown in Fig. 1, communication between providing apparatus 4 and the first apparatus 1 may for instance be wirebound. This may also hold for the communication between providing apparatus 4 and the second apparatus 2 (in particular if the second apparatus 2 is a freight centre). Communication between providing apparatus 4 and third apparatus 3 may for instance take place at least partially via a wireless communication (e.g. via cellular radio of WLAN), in particular if the third apparatus 3 is a portable device, e.g. of a deliverer. This may also hold for the second apparatus 2, in particular if the system 5 of Fig. 1 does not comprise a third apparatus 3. An at least partially wireless communication may for instance be understood as a communication wherein at least one communication leg is wireless, whereas the remaining communication legs are wirebound. Providing apparatus 4, first apparatus 1, second apparatus 2 and third apparatus 3 may then comprise according communication interfaces. Therein, concerning the at least partially wireless communication between the providing apparatus 4 and the second apparatus 2 or the third apparatus 3, providing apparatus 4 may not itself comprise a wireless communication interface, but may connect in a wirebound fashion to a gateway that sets up the wireless communication to the second apparatus 2 or third apparatus 3.

Apparatus 60 may further comprise an optional user interface 65, that may for instance comprise a display for displaying information to a user and/or a input device (e.g. a keyboard, keypad, touchpad, mouse, etc.) for receiving information from a user. User interface 65 may in particular be present if apparatus 60 represents the third apparatus 3, in particular in case of a portable electronic device such as a hand-held scanner or a smartphone.

Apparatus 60 may further comprise an optional mass storage 66 configured to store large amounts of data, in particular to store a plurality of data records with delivery-related information (e.g. if apparatus 60 represents the providing apparatus 60) or to store data required to operate an online store (e.g. if apparatus 60 represents the first apparatus 1).

If apparatus 60 represents the second apparatus 2, in particular in the form of a portable terminal, apparatus 60 may further comprise an optional position sensor 67 (e.g. a GNSS module) allowing apparatus 60 to determine its current position.

If apparatus 60 represents the second apparatus 2, it may further comprise an optional scanning unit and/or wireless sensor 68 enabling apparatus 60 to obtain the first information associated with a shipment. The wireless sensor may for instance be embodied as a reader device for RFID transponders or as an NFC receiver.

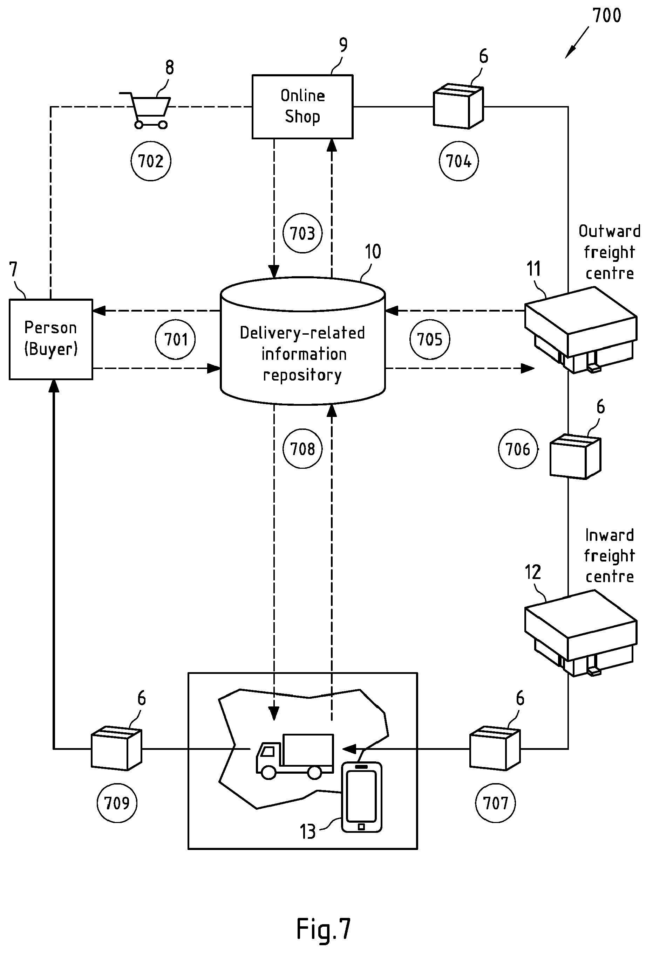

In the following, further example embodiments of the present invention will be presented with respect to Figs. 7.9.

Fig. 7 is a flowchart 700 illustrating exemplary actions taking place in an example embodiment of a system according to the present invention. Therein, the providing apparatus 4 is exemplarily embodied as delivery-related information repository 10, the first apparatus 1 is exemplarily embodied as online shop 9, the second apparatus 2 is exemplarily embodied as outward freight centre 11 and the third apparatus 3 is exemplarily embodied as hand-held scanner 13, which is associated with a deliverer.

Flowchart 700 illustrates the registration of a at least a part of delivery-related information of a person 7 at the delivery-related information repository 10, the purchase of a product by person 7 at online shop 9 as well as the process of delivering the shipment 6 containing the product via outward freight centre 11, inward freight centre 12 and the deliverer associated with scanner 13 according to the delivery-related information that is associated with person 7. Therein, the online shop 9 acts as a sender of the shipment. In Fig. 7, communications are represented by dashed lines, whereas transport of the shipment 6 is represented by solid lines. The communication between the delivery-related information repository 10 and the further entities shown in Fig. 7 may for instance take place as secure communications, e.g. based on the Secure Sockets Layer (SSL).

In a step 701, person 7 registers with the delivery-related information repository 10 and provides the following information to the delivery-related information repository 10: the (real) name (first name and last name) of person 7, street, house number, zip code, city and country forming the delivery address, and the person's credentials. The person's credentials may for instance be chosen by person 7 himself/herself. The credentials may for instance be a login name or nickname, and a password. The login name or nickname may be considered as an anonymous identity of person 7, which can be used by person 7 (together with the password) to access delivery-related information repository 10. The name, street, house number, zip code, city, country and credentials of person 7 are then stored in the delivery-related information repository 10, for instance together with a geo-coded position (e.g. as X/Y coordinates) representative of the combination of street, house number, zip code, city and country information, as delivery-related information. This delivery-related information may be enriched at delivery-related information repository 10 with further information (provided by person 7 and/or by delivery-related information repository 10), such as for instance authentication-related information (e.g. a password, code or parole) that allows (e.g. a deliverer or a facility (or its personnel) where a shipment has been deposited for retrieval), based on authentication information provided by a person, to decide whether the person is entitled to receive the shipment or not, and/or information (e.g. an electronic key or code) required to get access to an unattended delivery device.

To complete the registration, a verification code may be sent to person 7 which has to be provided back to delivery-related information repository 10 (e.g. by clicking a link that contains the verification code).

In step 702, person 7 visits online shop 7 (for instance via a browser installed on a computer of person 7 connected to the Internet to which also a server of the online ship is connected) and fills shopping cart 8 with at least one product.

During a checkout procedure at online shop 9, the browser of person 7 is then re-directed to the delivery-related information repository 10 in a step 703, where person 7 is required to provide the person's credentials. In case of valid credentials, the delivery-related information repository 10 returns, to online shop 9, information (the first information discussed above) to be printed on a label of shipment 6. From this information, online shop 6 cannot learn at least the complete delivery-related information stored in delivery-related information repository 10, in particular not the delivery address contained therein. The information may for instance be in the form of a barcode. Alternatively, the login name or nickname of person 7 may constitute this information. The information may alternatively contain the delivery-related information in encrypted form.

In a step 704, the shipment 6 with this label is transported on behalf of online shop 9, as sender of shipment 6, to the outward freight centre 11. Outward freight centre 11 requires at least a rough representation of the delivery address to be able to forward shipment 6 to the correct inward freight centre 12 (which is usually located near the delivery address). To this end, outward freight centre 11 uses the information from the label of the shipment 6 to request further information (the second information discussed above) from delivery-related information repository 10. This further information may for instance be or enable the outward freight centre 11 to derive at least a part of the delivery-related information (e.g. country, city, zip code and street of the delivery address comprised by the delivery-related information).

In step 706, shipment 6 is forwarded to the correct inward freight centre 12.

In step 707, shipment 6 is further transported towards the delivery address by using a delivery point (which may be even closer situated near the delivery address), from which for instance a deliverer starts a tour to actually deliver shipment 6 to the delivery address.

In step 708, the deliverer uses his scanner 13 to capture the information from the label of the shipment and to use this information to request further information (the third information discussed above) from delivery-related information repository 10. This further information may for instance be or enable scanner 13 and/or the deliverer to derive the complete delivery-related information (e.g. the complete delivery address) or to at least derive the still missing parts of the delivery-related information (e.g. house number and name of the recipient/addressee as parts of the delivery address).

In step 709, the deliverer delivers shipment 6 to the delivery address, by handing the shipment over to person 7. Alternatively, the delivery may be made to an unattended delivery device identified by the delivery address.

Advantageously thus the complete delivery-related information (in particular the delivery address) only became known to the deliverer, but not to the online shop 9, the outward freight centre 11 and the inward freight centre 12. Furthermore, if shipment 6 would be delivered into an unattended delivery device (e.g. a lockable compartment of a vehicle), not even the name of the recipient/addressee would have to be made known to the deliverer, since an identification (like for instance the license number) of the unattended delivery device is sufficient to deliver the shipment.

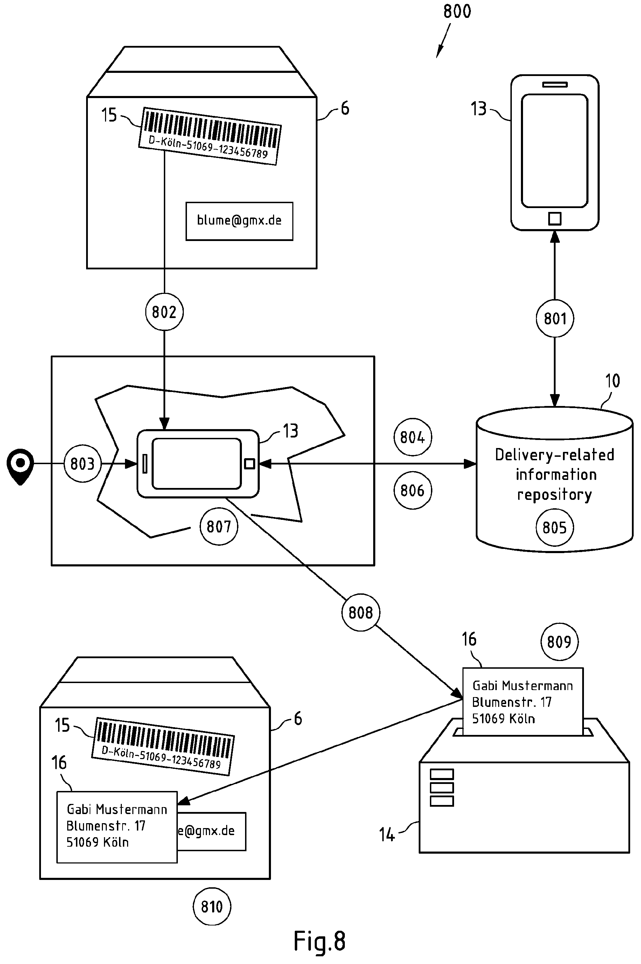

Fig. 8 is a flowchart 800 illustrating exemplary actions taking place in a further example embodiment of a system according to the present invention.

In this example embodiment, it is conceivable that the scanner 13 of a deliverer constitutes the second apparatus 2 of the system 5 of Fig. 1. The information that is present on label 15 of shipment 6 "D-Köln-51069-123456789" (and which may also be encoded in the barcode of label 15) may then have been provided by delivery-related information repository 10 (representing the providing apparatus 4) to a sender of the shipment 6 (e.g. to online shop 9 of Fig. 7). Thus the sender of shipment 6 knows from the string "D-Köln-51069" that the shipment is destined for the following partial address: Country = Germany, City = Cologne (Köln), Zip Code = 51069. The sender is however not able to derive the rest of the address, which is here exemplarily represented by the encrypted string "123456789". The information "D-Köln-51069" may then also be sufficient for further entities (e.g. freight centres 11 and 12 of Fig. 7) involved in the delivery of shipment 6 according to the delivery-related information to at least forward the shipment 6 to the deliverer.

In the present example embodiment, it is also conceivable that the scanner 13 of the deliverer constitutes the third apparatus 3 of the system 5 of Fig .1. The information that is present on label 15 of shipment 6 "D-Köln-51069-123456789" (and which may also be encoded in the barcode of label 15) may then for instance have been obtained or derived by a second apparatus 2 (e.g. the outward freight centre 11 of Fig. 7) and printed on label 15, for instance based on the nickname "blume@gmx.de" that is also printed on shipment 6. For instance, the second apparatus 2 obtained, as first information associated with shipment 6, only the nickname "blume@gmx.de" and used this nickname to retrieve at least the information "D-Köln-51069-123456789" (as second information) from the delivery-related information repository 10, which then was printed by the second apparatus 2 onto label 15 to serve as fifth information for the third apparatus 3. The second information "D-Köln-51069-123456789" thus constitutes an at least partially encrypted representation of the delivery-related information. Instead of or in addition to the nickname "blume@gmx.de" as first information, a transaction identifier (or shipment identifier) may be associated with (e.g. printed on) shipment 6 to serve as first information. This transaction identifier may for instance be specific for the shipment 6 (e.g. be based on a timestamp and/or a random number) and thus be inter alia more suited for tracking purposes, as compared to the nickname "blume@gmx.de", which does not allow to differentiate between two shipments destined to a delivery address associated with this nickname.

In the following description, it will be assumed that a transaction identifier is associated with the shipment 6 that allows identifying, towards the delivery-related information repository 10, the shipment 6 for which information is requested from delivery-related information repository 10. This transaction identifier may for instance be comprised in the label 15 (e.g. in the barcode thereof) or in another label of shipment 6 (not shown in Fig. 8). It may for instance have been provided by the delivery-related information repository 10 to a sender of shipment 6 and associated by the sender with the shipment 6.

In Fig. 8, some or all communications with the delivery-related information repository 10 may for instance be secure, e.g. by using SSL or TLS connections.

In step 801 of the flowchart 800 of Fig. 8, an application (embodied in the form of software) is installed on the scanner 13 of a deliverer. A deliverer for instance first registers with the delivery-related information repository 10 by providing a username and password, and in turn receives an email message with a verification code. The deliverer provides the verification code to the delivery-related information repository 10 to finalize the registration. Subsequently, the deliverer downloads the application to the scanner 13 and installs the application on the scanner 13. The application on scanner 13 may then be used to request information (second/sixth information as described above) from delivery-related information repository 10.

In a step 802, which occurs during a process of delivering shipment 6 according to delivery-related information, the deliverer needs further details on the delivery-related information, since so far, only the information "D-Köln-51069" is available for him, i.e. at least the house number and the name of the recipient/addressee is still missing and required to complete the delivery of the shipment 6. The deliverer thus uses scanner 13 to capture information from label 15 of shipment 6. This information may at least be the character string "12345678" or corresponding information encoded into the barcode of the label 15, and the transaction identifier, which may be included in the barcode or may be included in a separate label on shipment 6 as described above.

In step 803, the scanner 13 determines its current position (e.g. in WGS-84 coordinates). This may happen due to a triggering by the deliverer, or may happen in regular intervals anyway, or may happen in response to the scanning performed in step 802.

In step 804, the scanner 13 enters into communication with the delivery-related information repository 10. This may be triggered by the deliverer, or may happen in response to the scanning of step 802 and/or the position determining of step 803. In this communication, for instance a username and password of the deliverer, the transaction identifier and the position of the scanner 13 may be provided to the delivery-related information repository 10.

In a step 805, the username and password are checked against the username-password combination provided by the deliverer during registration (see step 801). If there is a match, authorization of the deliverer is considered to be in order. If the position of the scanner 13 is further considered to be within an area of pre-defined radius (e.g.1, 2 or 5 km) associated with the delivery-related information, a decryption key stored in delivery-related information repository 10 is retrieved based on the transaction identifier. An association between the transaction identifier and the decryption key may for instance have been generated in the delivery-related information repository 10 in response to a request of a sender of shipment 6 for the transaction identifier. The decryption key may for instance only be useable to decrypt the encrypted part of the delivery-related information represented by the string "12345678" on label 15 of shipment 6. In step 805, also further information provided by the scanner 13 in step 804 may be checked, such as for instance an integrity of the application on the scanner 13 (this may be checked based on a hash value over the software of the application, which hash code has to match a hash code stored in delivery-related information repository 10).

In step 806, the decryption key is transmitted to the scanner 13.

In step 807, the decryption key is used to decrypt the encrypted part of the delivery-related information represented by the string "12345678" on label 15 of shipment 6.

In step 808, the (now complete) delivery-related information is provided (via a wirebound, e.g. USB, or wireless, e.g. Bluetooth or NFC connection) to a printer (e.g. a portable printer), which prints a label 16 containing the complete delivery-related information (in this exemplary case the complete delivery address).

In step 810, the label 16 is affixed to the shipment 6, and delivery is completed by handing over the shipment 6 to the recipient/addressee.

It should be noted that, in the above-described embodiment, the string "12345678" may alternatively represent the transaction identifier, and the encrypted part of the delivery-related information may then for instance be included in the barcode of label 15.

As already described in example embodiments above, instead of a decryption key, the missing parts of the delivery-related information or even the complete delivery-related information as stored in delivery-related information repository 10 may be provided to the scanner 13 in step 806, and step 807 may then be obsolete.

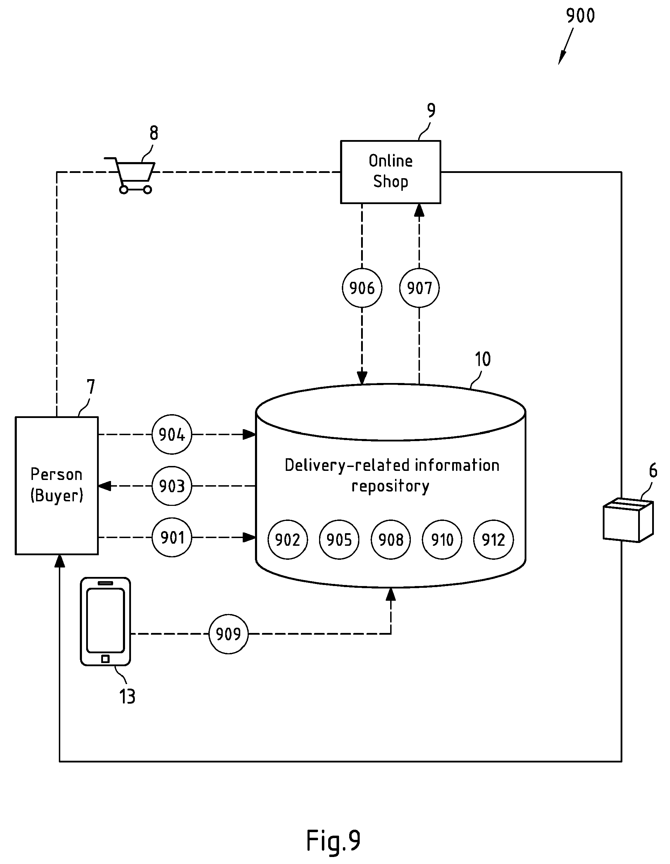

Fig. 9 is a flowchart 900 illustrating an exemplary method for confirming a person's delivery-related information (in particular a person's delivery address) according to the present invention. It may be advantageous to be able, from a perspective of the delivery-related information repository 10, to be able to provide information to a sender of a shipment comprising a product concerning the trustworthiness of a person that purchases the product from the sender and opts for a delivery with limited exposure of the delivery-related information according to the present invention. It may be important for the sender to know that the delivery-related information that is registered for a person at the delivery-related information repository 10 is correct, for instance if the sender wants to offer a payment method to the person that allows the person to pay for the product even after the shipment with the product has been delivered to the person. If the delivery-related information registered at the delivery-related information repository 10 is not correct, this may cause the delivery of the shipment to be in vain. Even if the shipment is returned without damage to the sender, the sender will have to bear the delivery costs.

To inter alia avoid such a scenario, the delivery-related information repository 10 may track successful delivery of shipments according to delivery-related information and assign an according status to the registered delivery-related information and/or to the person for which this delivery-related information is registered.

In Fig. 9, communication is illustrated by dashed lines, whereas transport of the shipment is illustrated by solid lines. In Fig. 9, for entities matching entities in Fig. 8, the same reference numerals were used.

In a step 901 of flowchart 900, person 7 signs in to delivery-related information repository 10, for instance via the HTTPS protocol or another secure communication protocol. Person 7 then provides information to delivery-related information repository 10 to enable delivery-related information repository 10 to generate a data record. This data record may for instance comprise the person's name (first name and last name), street, house number, zip code, city, country, a login name or nickname and a password. Login name or nickname may for instance be an email address, a telephone number or any other alphanumerical string. The data record may be enriched by the delivery-related information repository 10 with further information, such as for instance a unique ID and a status indicator. Step 901 may for instance be performed instead of step 701 of the flowchart 700 of Fig. 7. The combination of the person's name, street, house number, zip code, city and country may for instance constitute delivery-related information and in particular a delivery address.

In step 902, a message with an activation code is then sent to the person 7.

In step 903, person 7 activates its registration by providing the activation code back to the delivery-related information repository 10.

In step 904, delivery-related information repository 10 sets the status indicator in the data record of person 7 to "new member".

In step 906, person 7 provides, in the context of a checkout procedure at an online shop, his/her credentials (login name or nickname and password) to the delivery-related information repository 10. Step 906 may thus for instance replace step 703 of Fig. 7.

In step 907, delivery-related information repository 10 returns, to online shop 9 as the sender of the shipment, first information (e.g. a transaction identifier generated from a timestamp and/or random information and/or at least parts of the information stored in the data record of person 7, or an encrypted representation of at least a part of the delivery-related information) as well as the current value of the status indicator, which, in the present example, would still be "new member", and would thus indicate a rather low trustworthiness of person 7 to the sender.

In a step 908, the status indicator is set to "active member".

Based on the first information, shipment is then delivered according to the delivery-related information registered in delivery-related information repository 10, as has been described in various variants above.

In step 909, information on a successful delivery of shipment 6 according to the delivery-related information is reported to the delivery access repository 10 by scanner 13, for instance triggered by the deliverer associated with scanner 13.

In a step 910, the status indicator in the data record of user 7 in delivery-related information repository 10 is then set to "confirmed active member".

Thus if person 7 would now again refer a sender of a shipment to the delivery-related information registered in delivery-related information repository 10, the sender of the shipment would receive, from delivery-related information repository 10, the value "confirmed active member" of the status indicator, which indicates to the sender that the registered delivery-related information has been confirmed by at least one successful delivery. The sender may thus adopt the payment options granted to person 7 accordingly.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program) may also be used in a corresponding manner in an example embodiment of any other category. It should also be understood that presence of a feature in the presented example embodiments shall not necessarily mean that this feature forms an essential feature of the invention and cannot be omitted or substituted.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented without deviating from the scope of the appended claims.

## Claims

1. A method comprising:
- providing, to a first apparatus associated with a sender of a shipment, first information that can be caused, by the first apparatus or the sender, to become associated with the shipment and thus obtainable by a second apparatus associated with an entity that is involved in a process of delivering the shipment according to delivery-related information;
- providing, to the second apparatus, second information, wherein the second information is either third information that is a first representation of at least a part of the delivery-related information selected at least based on at least a part of the first information, or is fourth information that is useable for deriving, from at least a part of the first information, a first representation of at least a part of the delivery-related information; wherein the second information is neither provided to the first apparatus nor to the sender.

2. The method according to claim 1, wherein the fourth information has been selected at least based on at least a part of the first information.

3. The method according to any of the preceding claims, wherein the second information is provided in response to receipt of at least a part of the first information from the second apparatus.

4. The method according to any of the preceding claims, wherein at least the first representation of at least a part of the delivery-related information enables the second apparatus or the entity associated with the second apparatus to forward the shipment to a further entity involved in the process of delivering the shipment or to deliver the shipment.

5. The method according to any of the preceding claims, wherein it is a necessary condition for the providing of the second information to the second apparatus and/or for a use of the second information by the second apparatus that a geographical position of the second apparatus is within a pre-defined area associated with the delivery-related information.

6. The method according to any of the preceding claims, further comprising:
- providing, to a third apparatus, sixth information, wherein the sixth information is either seventh information that is a second representation of at least a part of the delivery-related information selected at least based on at least a part of the first information or of fifth information that has been associated with the shipment by the second apparatus or by the entity, or is eighth information that is useable for deriving, from at least a part of the first information or of the fifth information, a second representation of at least a part of the delivery-related information.

7. The method according to claim 6, wherein it is a necessary condition for the providing of the sixth information to the third apparatus and/or for a use of the sixth information by the third apparatus that a geographical position of the third apparatus is within a pre-defined area associated with the delivery-related information.

8. The method according to any of the preceding claims, further comprising:
- associating the delivery-related information, which has at least partially been provided by a person, with credentials of the person;
wherein it is a necessary condition for the providing of the first information to the first apparatus that information matching the credentials of the person has been provided.

9. The method according to claim 8, wherein the sender is a seller of a product that is purchased by the person in an online shop associated with the first apparatus, wherein the shipment is or is associated with the product, wherein the first apparatus directs the person to an apparatus that obtains information from the person and provides the first information to the first apparatus if the provided information matches the credentials of the person.

10. A method, comprising:
- obtaining, at a second apparatus associated with an entity that is involved in a process of delivering a shipment according to delivery-related information, first information that is associated with the shipment; and
- obtaining, at the second apparatus, second information, wherein the second information is either third information that is a first representation of at least a part of the delivery-related information selected at least based on at least a part of the first information, or is fourth information that is useable for deriving, from at least a part of the first information, a first representation of at least a part of the delivery-related information.

11. The method according to claim 10, further comprising:
- providing information representative of a geographical position of the second apparatus to an apparatus to enable the apparatus to check a condition that the position of the second apparatus is within a pre-defined area associated with the delivery-related information, wherein this condition is a necessary condition for provision of the second information from the apparatus to the second apparatus.

12. The method according to claim 10, wherein the second information is the fourth information, the method further comprising:
- obtaining a geographical position of the second apparatus;
- checking a condition that the position of the second apparatus is within a pre-defined area associated with the delivery-related information, and
- deriving, from at least a part of the first information, the first representation of at least a part of the delivery-related information using the fourth information, and
- providing or processing the first representation of at least a part of the delivery-related information;
wherein the condition that the position of the second apparatus is within a pre-defined area associated with the delivery-related information is a necessary condition for the deriving of the first representation of at least a part of the delivery-related information and/or for the providing or processing of the first representation of at least a part of the delivery-related information.

13. A method, comprising:
- receiving, at a first apparatus associated with a sender of a shipment, first information;
- conducting or triggering a process in which the first information is associated with the shipment and thus becomes obtainable by a second apparatus associated with an entity that is involved in a process of delivering the shipment according to delivery-related information;
wherein the first information has one of the following properties:
- at least a part of the first information can be provided by the second apparatus to another apparatus to allow the other apparatus to select third information, which is a first representation of at least a part of the delivery-related information and which is to be provided to the second apparatus, or
- from at least a part of the first information, a first representation of at least a part of the delivery-related information can be derived at the second apparatus using fourth information.

14. A computer program, the computer program when executed by a processor causing an apparatus to perform or control the actions of the method of any of the preceding claims.

15. An apparatus configured to perform or control or comprising respective means for performing or controlling the method of any of the claims 1-13.

## Amended claims

### Amended claims in accordance with Rule 137(2) EPC.

1. A method comprising:
- providing, to a first apparatus associated with a sender of a shipment, first information that can be caused, by the first apparatus or the sender, to become associated with the shipment and thus obtainable by a second apparatus associated with an entity that is involved in a process of delivering the shipment according to delivery-related information;
- providing, to the second apparatus, second information, wherein the second information is either third information that is a first representation of at least a part of the delivery-related information selected at least based on at least a part of the first information, or is fourth information that is useable for deriving, from at least a part of the first information, a first representation of at least a part of the delivery-related information; wherein the second information is neither provided to the first apparatus nor to the sender, and wherein A and/or B holds:
- A: it is a necessary condition for the providing of the second information to the second apparatus that a geographical position of the second apparatus is within a pre-defined area associated with the delivery-related information, said condition being checked by an apparatus that provides the second information to the second apparatus;
- B: it is a necessary condition for the use of the second information by the second apparatus that a geographical position of the second apparatus is within a pre-defined area associated with the delivery-related information, said condition being checked by the second apparatus.

2. The method according to claim 1, wherein the geographical position of the second apparatus is determined by the second apparatus or requested from another entity that offers localization services.

3. The method according to any of the preceding claims, wherein the pre-defined area corresponds to or is derivable from a representation of at least a part of the delivery-related information that is already known by the second apparatus without having to receive the second information, in particular because this representation of at least a part of the delivery-related information is associated with the shipment received by the second apparatus.

4. The method according to any of the preceding claims, wherein the restricted use of the second information is safeguarded on the second apparatus by a tamper-resistant software and/or wherein measures are taken at the second apparatus to exclude that the geographical position is manipulated.

5. The method according to any of the preceding claims, wherein the fourth information is already available at the second apparatus when the first information is obtained by the second apparatus.

6. The method according to any of the preceding claims, wherein the fourth information is one or more keys useable to decrypt at least a part of encrypted delivery-related information.

7. The method according to any of the preceding claims, wherein the second apparatus is a handheld computer, or is a handheld electronic device used to scan or otherwise capture information from shipments.

8. The method according to any of the preceding claims, wherein the fourth information has been selected at least based on at least a part of the first information.

9. The method according to any of the preceding claims, wherein the second information is provided in response to receipt of at least a part of the first information from the second apparatus.

10. The method according to any of the preceding claims, wherein at least the first representation of at least a part of the delivery-related information enables the second apparatus or the entity associated with the second apparatus to forward the shipment to a further entity involved in the process of delivering the shipment or to deliver the shipment.

11. The method according to any of the preceding claims, further comprising:
- associating the delivery-related information, which has at least partially been provided by a person, with credentials of the person;
wherein it is a necessary condition for the providing of the first information to the first apparatus that information matching the credentials of the person has been provided.

12. The method according to claim 11, wherein the sender is a seller of a product that is purchased by the person in an online shop associated with the first apparatus, wherein the shipment is or is associated with the product, wherein the first apparatus directs the person to an apparatus that obtains information from the person and provides the first information to the first apparatus if the provided information matches the credentials of the person.

13. A method, comprising:
- obtaining, at a second apparatus associated with an entity that is involved in a process of delivering a shipment according to delivery-related information, first information that is associated with the shipment; and
- obtaining, at the second apparatus, second information, wherein the second information is either third information that is a first representation of at least a part of the delivery-related information selected at least based on at least a part of the first information, or is fourth information that is useable for deriving, from at least a part of the first information, a first representation of at least a part of the delivery-related information, wherein A or B holds:
- A: the method further comprises providing information representative of a geographical position of the second apparatus to an apparatus to enable the apparatus to check a condition that the position of the second apparatus is within a pre-defined area associated with the delivery-related information, wherein this condition is a necessary condition for provision of the second information from the apparatus to the second apparatus;
- B: the second information is the fourth information and the method further comprises:
- obtaining a geographical position of the second apparatus;
- checking a condition that the position of the second apparatus is within a pre-defined area associated with the delivery-related information,
- deriving, from at least a part of the first information, the first representation of at least a part of the delivery-related information using the fourth information, and
- providing or processing the first representation of at least a part of the delivery-related information;
wherein the condition that the position of the second apparatus is within a pre-defined area associated with the delivery-related information is a necessary condition for the deriving of the first representation of at least a part of the delivery-related information and/or for the providing or processing of the first representation of at least a part of the delivery-related information.

14. A computer program, the computer program when executed by a processor causing an apparatus to perform or control the method of any of the preceding claims.

15. An apparatus configured to perform or control or comprising respective means for performing or controlling the method of any of the claims 1-13.
